# EUROPEAN PATENT APPLICATION

(11) **EP 4 664 979 A1**
(43) Date of publication of application: **17.12.2025**
(21) Application number: 23920400.1
(22) Date of filing: 08.02.2023
(51) Int. Cl.: H04W 28/02

(54) **CHANNEL ACCESS METHOD AND APPARATUS, DEVICE, AND STORAGE MEDIUM**

(71) Applicant: GUANGDONG OPPO MOBILE TELECOMMUNICATIONS CORP., LTD., Dongguan, Guangdong 523860 (CN)
(72) Inventor: LU, Liuming, Dongguan, Guangdong 523860 (CN); XU, Yanchao, Dongguan, Guangdong 523860 (CN)
(74) Representative: Novagraaf Technologies
(86) International application number: PCT/CN2023/075066
(87) International publication number: WO 2024/164192

(57) **Abstract**

The present application relates to the field of wireless communications, and discloses a channel access method and apparatus, a device, and a storage medium. The method is executed by an access point (AP) supporting a delay-sensitive traffic service period. The method comprises: sending a channel protection threshold to a station (STA), the channel protection threshold being used by a scheduling AP of the delay-sensitive traffic service period and/or a member STA of the delay-sensitive traffic service period to preferentially acquire a transmission opportunity (TXOP) and/or initiate the transmission of delay-sensitive traffic data during the delay-sensitive traffic service period. The channel protection threshold is sent by the AP supporting the delay-sensitive traffic service period, so that the member STA of the delay-sensitive traffic service period and/or the AP of the delay-sensitive traffic service period preferentially acquire the TXOP and/or initiate the transmission of the delay-sensitive traffic data during the delay-sensitive traffic service period.

## Description

### TECHNICAL FIELD

The present disclosure relates to the field of wireless communications, and in particular, relates to a method and apparatus for channel access, and a device and a storage medium thereof.

### RELATED ART

A target wake time (TWT) is negotiated between an access point (AP) and a station (STA). Within a service period (SP) of the TWT, the STA wakes up and performs data transmission with the AP. Upon the data transmission, the STA returns to a sleep state. A R-TWT (R-TWT) provides a higher reliability of transmission of time sensitive traffic.

However, no solution is proposed for how the AP and the STA gain a transmission opportunity (TXOP) and/or initiate the transmission of time sensitive traffic data within or beyond the SP of the R-TWT.

### SUMMARY

Embodiments of the present disclosure provide a method and apparatus for channel access, and a device and a storage medium thereof. The technical solutions are as follows.

According to one aspect of the embodiments of the present disclosure, a method for channel access is provided. The method is performed by an AP that supports an SP for time sensitive traffic, and includes:

transmitting a channel protection threshold to an STA, wherein the channel protection threshold is used for a scheduling AP corresponding to the service period for the time sensitive traffic and/or a member STA corresponding to the service period for the time sensitive traffic to prioritize gaining a TXOP and/or initiate transmission of time sensitive traffic data within the service period for the time sensitive traffic.

According to another aspect of the embodiments of the present disclosure, a method for channel access is provided. The method is performed by an STA that supports an SP for time sensitive traffic, and includes:
receiving a channel protection threshold from an AP, wherein the channel protection threshold is used for a scheduling AP corresponding to the service period for the time sensitive traffic and/or a member STA corresponding to the service period for the time sensitive traffic to prioritize gaining a TXOP and/or initiate transmission of time sensitive traffic data within the service period for the time sensitive traffic.

According to another aspect of the embodiments of the present disclosure, a method for channel access is provided. The method is performed by a first wireless device, and includes:
prioritizing gaining a TXOP and/or initiating transmission of time sensitive traffic data within a service period for the time sensitive traffic in a case where a channel within a channel protection threshold is in an idle state,
wherein the first wireless device supports the service period for the time sensitive traffic, and the channel protection threshold is used for a scheduling AP corresponding to the service period for the time sensitive traffic and/or a member STA corresponding to the service period for the time sensitive traffic to prioritize gaining the TXOP and/or initiate the transmission of the time sensitive traffic data within the service period for the time sensitive traffic.

According to another aspect of the embodiments of the present disclosure, a method for channel access is provided. The method is performed by a second wireless device, and includes:
deferring transmission and/or reinvoking a backoff procedure within a service period for time sensitive traffic in a case where a target interval is less than or equal to a channel protection threshold,
wherein the second wireless device supports the service period for the time sensitive traffic, the channel protection threshold is used for a scheduling AP corresponding to the service period for the time sensitive traffic and/or a member STA corresponding to the service period for the time sensitive traffic to prioritize gaining a TXOP and/or initiate transmission of time sensitive traffic data within the service period for the time sensitive traffic, the target interval is an interval between a first time and a second time, wherein the first time is a start time of the service period for the time sensitive traffic, the second time is a time when a backoff counter corresponding to the backoff procedure backs off to 0 or data transmission is initiated, and the second time is within the service period for the time sensitive traffic.

According to another aspect of the embodiments of the present disclosure, an apparatus for channel access is provided. The apparatus supports a service period for time sensitive traffic, and includes:
a first transmitting module, configured to transmit a channel protection threshold, wherein the channel protection threshold is used for a scheduling AP corresponding to the service period for the time sensitive traffic and/or a member STA corresponding to the service period for the time sensitive traffic to prioritize gaining a TXOP and/or initiate transmission of time sensitive traffic data within the service period for the time sensitive traffic.

According to another aspect of the embodiments of the present disclosure, an apparatus for channel access is provided. The apparatus supports a service period for time sensitive traffic, and includes:
a second receiving module, configured to receive a channel protection threshold, wherein the channel protection threshold is used for a scheduling AP corresponding to the service period for the time sensitive traffic and/or a member STA corresponding to the service period for the time sensitive traffic to prioritize gaining a TXOP and/or initiate transmission of time sensitive traffic data within the service period for the time sensitive traffic.

According to another aspect of the embodiments of the present disclosure, an apparatus for channel access is provided. The apparatus includes:
a third processing module, configured to prioritize gaining a TXOP and/or initiate transmission of time sensitive traffic data within a service period for the time sensitive traffic in a case where a channel within a channel protection threshold is in an idle state,
wherein the apparatus supports the service period for the time sensitive traffic, and the channel protection threshold is used to for a scheduling AP corresponding to the service period for the time sensitive traffic and/or a member STA corresponding to the service period for the time sensitive traffic to prioritize gaining the TXOP and/or initiate the transmission of the time sensitive traffic data within the service period for the time sensitive traffic.

According to another aspect of the embodiments of the present disclosure, an apparatus for channel access is provided. The apparatus includes:
a fourth processing module, configured to defer transmission and/or reinvoking a backoff procedure within a service period for time sensitive traffic in a case where a target interval is less than or equal to a channel protection threshold,
wherein the apparatus supports the service period for the time sensitive traffic, the channel protection threshold is used to for a scheduling AP corresponding to the service period for the time sensitive traffic and/or a member STA corresponding to the service period for the time sensitive traffic to prioritize gaining a TXOP and/or initiate transmission of time sensitive traffic data within the service period for the time sensitive traffic, the target interval is an interval between a first time and a second time, wherein the first time is a start time of the service period for the time sensitive traffic, the second time is a time when a backoff counter corresponding to the backoff procedure backs off to 0 or data transmission is initiated, and the second time is within the service period for the time sensitive traffic.

According to another aspect of the embodiments of the present disclosure, a wireless device is provided. The wireless device includes: a processor; a transceiver connected to the processor; and a memory configured to store one or more executable instructions by the processor; wherein the processor is configured to load and execute the one or more executable instructions to cause the wireless device to perform the method for channel access according to above aspects.

According to another aspect of the embodiments of the present disclosure, a computer-readable storage medium is provided. The computer-readable storage medium stores one or more executable instructions, which when loaded and run by a processor, cause the processor to perform the method for channel access according to above aspects.

According to another aspect of the embodiments of the present disclosure, a computer program product is provided. The computer program product includes one or more computer instructions, wherein the one or more computer instructions are stored in a computer-readable storage medium, and when read and executed by a processor of a computer device, cause the computer device to perform the method for channel access according to above aspects.

According to another aspect of the embodiments of the present disclosure, a chip is provided. The chip includes programmable logical circuity and/or one or more program instructions, wherein the chip is configured to perform the method for channel access according to above aspects.

According to another aspect of the embodiments of the present disclosure, a computer program is provided. The computer program includes one or more computer instructions, wherein the one or more computer instructions are stored in a computer-readable storage medium, and when read and executed by a processor of a computer device, cause the computer device to perform the method for channel access according to above aspects.

The technical solutions according to the embodiments of the present disclosure achieve the following technical effects.

The AP that supports the service period for the time sensitive traffic transmits the channel protection threshold, such that the scheduling AP corresponding to the service period for the time sensitive traffic and/or the member STA corresponding to the service period for the time sensitive traffic prioritize gaining the TXOP and/or initiate transmission of time sensitive traffic data within the service period for the time sensitive traffic, and data transmission of the time sensitive traffic is prioritized.

### BRIEF DESCRIPTION OF DRAWINGS

For clearer descriptions of the technical solutions according to the embodiments of the present disclosure, the following briefly introduces the accompanying drawings required for describing the embodiments. Apparently, the accompanying drawings in the following description show merely some embodiments of the present disclosure, and persons of ordinary skill in the art may still derive other drawings from these accompanying drawings without creative efforts.
FIG. 1 is a schematic diagram of a method of enhanced distributed channel access (EDCA) in some practices;
FIG. 2 is a schematic diagram of a method of EDCA in some practices;
FIG. 3 is a schematic diagram of a wireless fidelity (Wi-Fi) system according to some embodiments of the present disclosure;
FIG. 4 is a schematic flowchart of a method for channel access according to some embodiments of the present disclosure;
FIG. 5 is a schematic flowchart of a method for channel access according to some embodiments of the present disclosure;
FIG. 6 is a schematic flowchart of a method for channel access according to some embodiments of the present disclosure;
FIG. 7 is a schematic diagram of a format of an Information Control field according to some embodiments of the present disclosure;
FIG. 8 is a schematic flowchart of a method for channel access according to some embodiments of the present disclosure;
FIG. 9 is a schematic flowchart of a method for channel access according to some embodiments of the present disclosure;
FIG. 10 is a schematic diagram of a method for channel access according to some embodiments of the present disclosure;
FIG. 11 is a schematic diagram of a method for channel access according to some embodiments of the present disclosure;
FIG. 12 is a schematic diagram of a method for channel access according to some embodiments of the present disclosure;
FIG. 13 is a schematic diagram of a method for channel access according to some embodiments of the present disclosure;
FIG. 14 is a schematic diagram of a method for channel access according to some embodiments of the present disclosure;
FIG. 15 is a block diagram of an apparatus for channel access according to some embodiments of the present disclosure;
FIG. 16 is a block diagram of an apparatus for channel access according to some embodiments of the present disclosure;
FIG. 17 is a block diagram of an apparatus for channel access according to some embodiments of the present disclosure;
FIG. 18 is a block diagram of an apparatus for channel access according to some embodiments of the present disclosure; and
FIG. 19 is a schematic structural diagram of a wireless communication device according to some embodiments of the present disclosure.

### DETAILED DESCRIPTION

For clearer descriptions of the objectives, technical solutions, and advantages of the present disclosure, embodiments of the present disclosure are further described in detail below with reference to the accompanying drawings. The exemplary embodiments are described in detail herein, and examples are illustrated in the accompanying drawings. When the following description refers to the accompanying drawings, the same numbers in different accompanying drawings represent the same or similar elements unless otherwise indicated. The embodiments described in the following exemplary embodiments do not represent all embodiments consistent with the present disclosure. Rather, they are merely examples of apparatus and methods consistent with certain aspects of the present disclosure, as detailed in the appended claims.

The terms used in the present disclosure are for the purpose of describing particular embodiments only and are not intended to limit the present disclosure. As used in the present disclosure and the appended claims, the singular forms "a," "an," and "the" are intended to include the plural forms as well, unless the context clearly indicates otherwise. It should also be understood that the term "and/or" as used herein refers to and encompasses any or all possible combinations of one or more associated listed items.

It should be understood that although the terms "first," "second," "third," and the like may be used herein to describe various pieces of information, and such information should not be limited to these terms. These terms are only used to distinguish one type of information from another. For example, first information may also be referred to as second information, and similarly, second information may also be referred to as first information, without departing from the scope of the present disclosure. The word "if," as used herein, may be interpreted as "in a case where," "in a case that," "in the case of," or "in response to determining that," depending on the context.

Some related technologies involved in the embodiments of the present disclosure are described as follows.

### (1) EDCA

With increasing types and complex demands for internet traffic, higher requirements are imposed on network performance. For quality of service (QoS) supports for transmission of the internet traffic at a medium access control (MAC) layer, the EDCA is used to provide priority supports and avoid channel access collisions in some practices. The EDCA may provide channel access transmission services with different priorities for different traffic, and provide different channel access priority supports for different traffic.

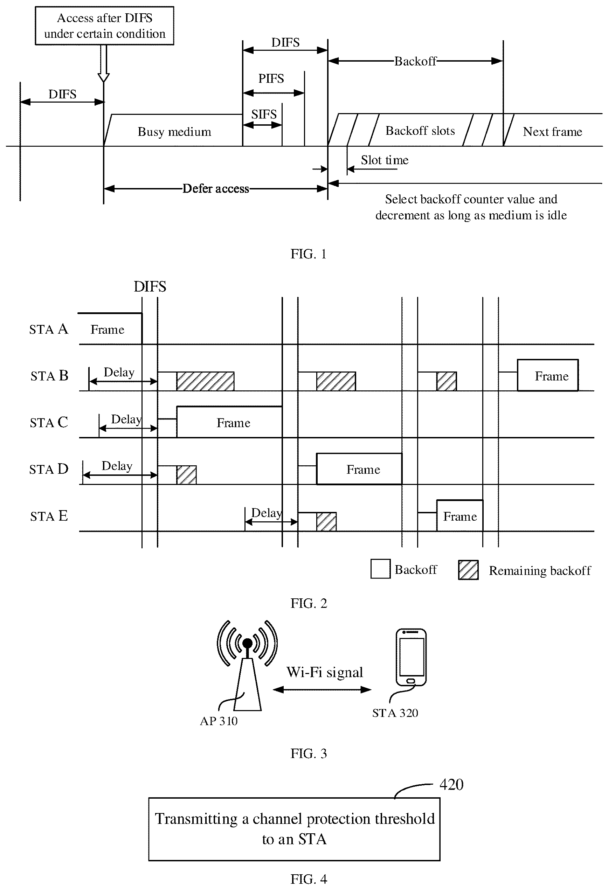

A basic method for channel access related to the EDCA is shown in FIG. 1. In a case where an STA detects that a channel changes from a busy state to an idle state in clear channel assessment (CCA), the STA needs to continue to detect whether the channel remains idle within a distributed coordination function interframe space (DIFS) time. In a case where the channel remains idle within the DIFS time, the STA performs a backoff procedure. In a case where the STA enters the backoff procedure, the STA needs to select a random number from a contention window (CW), and the number is referred to as a random backoff counter value. During the backoff procedure, each slot STA detects the channel, and a corresponding random backoff counter value decreases by 1 in a case where the channel is idle. In a case where the current random backoff counter value is 0, the STA acquires a channel access right and immediately transmits and resets the random backoff counter value. In a case where the current random backoff counter value is not 0, the STA continues to detect whether the channel remains idle until the random backoff counter value of the STA becomes 0, and the STA acquires the channel access right and immediately transmits and resets the random backoff counter value. In a case where another STA acquires the channel first during the backoff procedure, that is, the random backoff counter value of the another STA first decreases to 0, the random backoff counter value of the STA that does not acquire the channel remains unchanged. The random backoff counter value of the STA that does not acquire the channel decreases by 1 from the previous value until the value becomes 0 in the next time that the channel changes from the busy state to the idle state in the CCA, which is for ensuring fairness in network transmission.

Furthermore, in simple terms, the improved method for channel access related to the EDCA is that the EDCA provides the channel access transmission services with different priorities for different traffic. Specifically, each STA determines a corresponding CW[AC] based on an access category (AC) of a to-be-transmitted traffic, and an initial value of the CW[AC] is a corresponding CWmin[AC] value. The EDCA defines four ACs for traffic with priorities from high to low, that is, voice (AC_VO), video (AC_VI), best effort (AC_BE), and background (AC_BK). Each AC contends for transmission opportunities using the improved EDCA. A frame of the AC with a highest priority has a smallest CW value, and thus gains the transmission opportunity more likely.

Illustratively, as shown in FIG. 2, transmission of a station A over the channel is about to end, an STA B, an STA C, and an STA D need to transmit data, and the channel changes from the busy state to the idle state in the CCA. The STA B, the STA C, and the STA D continue to detect whether the channel keeps the idle state within the DIFS time, and the detection result indicates that the channel is in the idle state within the DIFS time. The STA B, the STA C, and the STA D each randomly select a random backoff counter value. The random backoff counter value of the STA B backs off to 4, the random backoff counter value of the STA C backs off to 1, and the random backoff counter value of the STA D backs off to 2. During the backoff procedure, the STA B, the STA C, and the STA D detect whether the channel is idle on a slot basis. In a case where the channel is idle in the first slot, the random backoff counter values of the STA B, the STA C, and the STA D are decreased by 1. That is, the random backoff counter value of the STA B is 3, the random backoff counter value of the STA C is 0, and the random backoff counter value of the STA D is 1. The random backoff counter value of the STA C is 0, and thus the STA C acquires the channel access right, immediately transmits data and resets the random backoff counter value (not shown in the drawing). In a case where the STA B and the STA D know that the STA C gains the channel, the random backoff counter values of the STA B and the STA D keep unchanged. In a case where the transmission of the STA C on the channel is about to end, the STA B, the STA D, and an STA E need to transmit data, and the channel changes from the busy state to the idle state in the CCA. The STA B, the STA D, and the STA E continue to detect whether the channel remains idle within the DIFS time, and the detection result indicates that the channel stays idle within the DIFS time. The STA B and the STA D use the previous random backoff counter values, that is, the random backoff counter value of the STA B is still 3, the random backoff counter value of the STA D is still 1, and the STA E randomly selects a random backoff counter value of 2. During the backoff procedure, the STA B, the STA D, and the STA E detect whether the channel is idle on a slot basis. In a case where the channel is idle in the first slot, the random backoff counter values of the STA B, the STA D, and the STA E are decreased by 1. That is, the random backoff counter value of the STA B is 2, the random backoff counter value of the STA D is 0, and the random backoff counter value of the STA E is 1. The random backoff counter value of the STA D is 0, and thus the STA D acquires the channel access right, and immediately transmits data and resets the random backoff counter value (not shown in the drawing). In a case where the STA B and the STA E know that the STA D gains the channel, the random backoff counter values of the STA B and the STA E keep unchanged, the STA B and the STA E wait for the next time that the channel transitions from the busy state to the idle state in the CCA, and the previous backoff procedure is repeated until the STA E acquires the channel and the STA B acquires the channel.

### (2) Basic service set (BSS)

The BSS is a basic topology of wireless local area networks (WLAN). A communication device that constitutes the BSS includes an AP and several STAs. Upon joining a wireless domain of the AP, each STA establishes an association with the AP, and data is exchanged between STAs over the AP. The AP allocates an associated identifier (AID) to each STA that joins the BSS. A value 0 of the AID indicates that the device is an AP.

### (3) TWT

The TWT is used to support energy-saving efforts in large-scale Internet of things environments. In some practices, a TWT mechanism supports to trigger-based (TB) uplink transmission, thereby expanding a scope of TWT operations.

In the TWT mechanism, a schedule is established between the STA and the AP (the schedule is negotiated by the STA and the AP), and the schedule is composed of TWT SPs. In a case where the SP negotiated by the STA and the AP arrives, the STA wakes up, waits for a trigger frame transmitted by the AP, and performs data exchange. In a case where the data transmission is completed, the STA returns to a sleep state. Each STA may negotiate the SP independently with the AP, and each STA may have a separate TWT SP.

The TWT mechanism allows the AP to manage the behavior of the BSS to mitigate contention between STAs and reduce an awake time of STAs in a power management mode, which is achieved by STAs operating in nonoverlapping time domains and/or frequency domains and performing frame exchange within predefined SPs. Therefore, the AP generally needs that all the associated STAs in the BSS are added to the TWT mechanism for scheduling by the AP to ensure the application effect of the TWT mechanism. The TWT protocol in some practices stipulates that a high-efficiency (HE) AP requests all associated STAs that support the TWT to join the TWT. After receiving an instruction transmitted by the AP to join the TWT, a non-AP STA negotiates individual TWT agreements or joins a broadcast TWT. Moreover, the SP of the TWT includes a trigger-enabled SP and a non-trigger-enabled SP, and a TWT scheduling AP performs scheduling within the trigger-enabled SP by transmitting a trigger frame. Meanwhile, the TWT protocol in some practices stipulates that TWT member STAs are not allowed transmit frames to the TWT scheduling AP beyond the SP of the broadcast TWT. Furthermore, within the trigger-enabled broadcast TWT, TWT member STAs are not allowed to transmit frames that do not carry an HE TB physical layer protocol data unit (PPDU) to the TWT scheduling AP. That is, in a case where a TWT member STA transmits a frame to the TWT scheduling AP, the frame should carry an HE TB PPDU.

A TWT member STA/TWT scheduled STA refers to an STA that supports the TWT and has negotiated the TWT SP with the AP. A TWT non-member STA/TWT non-scheduled STA refers to an STA that supports the TWT but is not a TWT member. That is, the non-TWT member STA/non-TWT scheduled STA supports the TWT, but has not negotiated the TWT SP with the AP. The TWT scheduling AP refers to an AP that supports the TWT and schedules the STA based on the TWT SP.

### (4) R-TWT

In some practices, the R-TWT is proposed to allow the AP to provide more predictable, lower worst latency and jitter, and higher reliability for the transmission of the time sensitive traffic using enhanced medium access protection and resource reservation mechanisms. At present, the R-TWT mainly adds two channel access rules in channel access. That is, an extremely high throughput (EHT) non-AP STA acts as an owner of the TXOP, and the TXOP is ended before the beginning of any R-TWT SP in a case where the TXOP is gained beyond the R-TWT SP; and an EHT AP schedules a quiet interval that overlaps with the R-TWT SP to shield the operations of a legacy STA that supports a quiet element within the TWT SP, and the shielding operations within the quiet interval are ineffective for the non-AP EHT STA.

The quiet interval refers to a time during which all STAs in the BSS temporarily terminate transmission, which is helpful for measuring whether interference is present in the system. The quiet interval is scheduled by the quiet elements in a beacon frame and a probe response frame, and specifies when the transmission terminates and how long the transmission lasts.

An R-TWT member STA/R-TWT scheduled STA refers to an STA that supports the R-TWT and has negotiated the R-TWT SP with the AP. The R-TWT non-member STA/R-TWT non-scheduled STA refers to an STA that supports the R-TWT but is not the R-TWT member. That is, the R-TWT non-member STA/R-TWT non-scheduled STA supports the R-TWT, but has not negotiated the R-TWT SP with the AP. The R-TWT scheduling AP refers to an AP that supports the R-TWT and schedules the STA based on the R-TWT SP.

However, application of the R-TWT has the following problems that still remain to be solved.
1. The R-TWT aims to provide a protected and reliable SP for the transmission of the time sensitive traffic, and the operating rules of the current R-TWT do not stipulate that the STA beyond the TWT SP should be in a doze state or may not transmit the frame to the AP and that the R-TWT non-member STA/non-scheduled STA must be in a doze state within the TWT SP. Therefore, channel access rules for the methods for channel access of the STA within and beyond the R-TWT SP are absent.
2. Protection for the R-TWT SP is insufficient, and the following problems have not been solved. The method for protecting the quiet interval that is overlapped with the R-TWT SP has not been applied to some EHT STAs, and how to restrict the channel access of the R-TWT non-member STA and the non-R-TWT STA (that is, an STA that does not support the R-TWT) within the R-TWT SP; and for the non-EHT STA that does not support the quiet elements, how to avoid the STA contending for the channel within R-TWT to gain the TXOP.

Based on the above problems, the present disclosure provides a method for channel access to solve above problems, and the method defines channel access rules related to the STA and/or AP and the service period for the time sensitive traffic.

FIG. 3 is a schematic diagram of a Wi-Fi system according to some embodiments of the present disclosure. The Wi-Fi system includes terminal devices, or a terminal device and a network device, or an AP and an STA, which is not limited in the present disclosure. In the present disclosure, the Wi-Fi system is illustrated as including an AP 310 and an STA 320.

In some scenarios, the AP is also referred to as an AP STA, which means that, in a certain sense, the AP is also a type of STA. In some scenarios, the STA is also referred to as a non-AP STA.

In some embodiments, STAs include an AP STA and a non-AP STA.

The communications within the Wi-Fi system involve communications between an AP and a non-AP STA, communications between non-AP STAs, or communications between an STA and a peer STA. The peer STA refers to a device in peer communication with an STA. For example, the peer STA may be an AP or a non-AP STA.

The AP is a bridge to a wired network and a wireless network, and mainly functions to be connected to various wireless network clients and access the wireless network to the Ethernet. The AP device is a terminal device or a network device equipped with a Wi-Fi chip.

It should be noted that the function of the STA in the communication system is not definite or specific. For example, in some scenarios, the mobile phone serves as the non-AP STA in a case where the mobile phone is connected to the router, and the mobile phone serves as the AP in a case where the mobile phone is the hotspot of other mobile phones.

The AP and the non-AP STA are devices applicable to the Internet of vehicles, Internet of things (IoT) nodes or sensors in the IoT, and smart cameras, smart remote controls, smart water meters and the like in smart home, sensors in smart city, and the like.

In some embodiments, the non-AP STA supports, but is not limited to, an 802.11be format. In some embodiments, the non-AP STA also supports various current and future WLAN formats of the 802.11 family, such as an 802.11ax format, an 802.11ac format, an 802.11n format, an 802.11g format, an 802.11b format, an 802.11a format, and the like. The non-AP STA may support network environments of next generation WLAN systems, and the next generation WLAN system is a WLAN system evolved from the 802.11ax system and is backward compatible with the 802.11ax system. Next generation Wi-Fi communication is any new generation Wi-Fi communication evolved from the Wi-Fi 7 based on the IEEE 802.11be specification, for example, EHT communication, ultra-high reliability (UHR) communication. For example, the non-AP STA is an EHT STA or a UHR STA.

In some embodiments, the AP is a device supporting the 802.11be format. The AP is also a device supporting various current and future WLAN formats of the 802.11 family, such as an 802.11ax format, an 802.11ac format, an 802.11n format, an 802.11g format, an 802.11b format, an 802.11a format, and the like. The AP may support network environments of next generation WLAN systems, and the next generation WLAN system is a WLAN system evolved from the 802.11ax system and is backward compatible with the 802.11ax system. Next generation Wi-Fi communication is any new generation Wi-Fi communication evolved from the Wi-Fi 7 based on the IEEE 802.11be specification, for example, EHT communication, UHR communication.

In some embodiments of the present disclosure, the STA is a mobile phone, a pad, an e-reader, a laptop, a desktop, a television, a virtual reality (VR) device, an augmented reality (AR) device, a mediated reality (MR) device, an extended reality (XR) device, a baffle reality (BR) device, a cinematic reality (CR) device, a deceive reality (DR) device, an industrial control wireless device, a set-top box, a wireless device in self-driving, an in-vehicle communication device, a wireless device in remote medical surgery, a wireless device in smart grid, a wireless device in transportation safety, a wireless device in a smart city or smart home, a wireless communication chip/application-specific integrated circuit (ASIC)/system on chip (SoC), and the like that support the WLAN/Wi-Fi technologies.

The Wi-Fi system in the embodiments of the present disclosure supports frequency bands including, but not limited to, low frequency bands (2.4 GHz, 5 GHz, and 6 GHz), and high frequency bands (45 GHz and 60 GHz).

One or more links are present between the STA and the AP.

In some embodiments, the STA and the AP support multi-band communications, such as simultaneous communications at 2.4 GHz, 5 GHz, 6 GHz, 45 GHz, and 60 GHz bands, or simultaneous communications in different channels of the same frequency band (or different frequency bands), such that the communication throughput and/or reliability between devices are improved. Such devices are often referred to as multi-band devices, or multi-link devices (MLDs), and are also referred to as multi-link entities or multi-band entities. The multi-link device may be an AP device or an STA device. In a case where the multi-link device is an AP device, one or more APs are included in the multi-link device; and in a case where the multi-link device is an STA device, one or more non-AP STAs are included in the multi-link device.

The multi-link device including one or more APs is also referred to as an AP, and the multi-link device including one or more non-AP STAs is also referred to as a non-AP. In the embodiments of the present disclosure, the non-AP is also referred to as an STA.

In some embodiments, the STA may be present in a form of one or more BSSs, and the BSS is a set of STAs that can be successfully synchronized to communicate with each other. The BSS may include or not include the AP.

In some embodiments, the AP may include a plurality of APs, the non-AP may include a plurality of STAs, a plurality of links may be formed between the APs in the AP and the STAs in the non-AP, and data communication may be achieved between the APs in the AP and the corresponding STAs in the non-AP over the corresponding links.

In some embodiments, the AP is a device deployed in the WLAN/Wi-Fi system to provide a wireless communication function for the STA. The STA may be a user equipment (UE), an access terminal, a subscriber unit, a subscriber station, a rover station, a mobile station, a remote station, a remote terminal, a mobile device, a wireless communication device, a user agent, or a user apparatus. In some embodiments, the STA is a cellular phone, a cordless phone, a Session Initiation Protocol (SIP) phone, a wireless local loop (WLL) station, a personal digital assistant (PDA), a handheld device with a wireless communication function, a computing device or another processing device connected to a wireless modem, a vehicle-mounted device, or a wearable device, which is not limited in the embodiments of the present disclosure.

In some embodiments, both the station and the access point support the Institute of Electrical and Electronic Engineers (IEEE) 802.11 standards, but not limited to the IEEE 802.11 standards.

FIG. 4 is a schematic flowchart of a method for channel access according to some embodiments of the present disclosure. The embodiments are illustrated using an example where the method is performed by an AP that supports a service period for time sensitive traffic. The method includes at least part of the following process.

**In S420,** a channel protection threshold is transmitted to an STA.

The STA is an STA that supports the service period for the time sensitive traffic, and includes a member STA corresponding to the service period for the time sensitive traffic and/or a non-member STA corresponding to the service period for the time sensitive traffic. The member STA corresponding to the service period for the time sensitive traffic is an STA that supports the service period for the time sensitive traffic and has negotiated the service period for the time sensitive traffic with the AP, or a reserved STA corresponding to the service period for the time sensitive traffic, or a scheduled STA corresponding to the service period for the time sensitive traffic. The non-member STA corresponding to the service period for the time sensitive traffic is an STA that supports the service period for the time sensitive traffic but is not a member corresponding to the service period for the time sensitive traffic, that is, the non-member STA corresponding to the service period for the time sensitive traffic supports the service period for the time sensitive traffic but has not negotiated the service period for the time sensitive traffic with the AP. Alternatively, the non-member STA corresponding to the service period for the time sensitive traffic is a non-reserved STA corresponding to the service period for the time sensitive traffic, or a non-scheduled STA corresponding to the service period for the time sensitive traffic.

Likewise, a scheduling AP corresponding to the service period for the time sensitive traffic is an AP that supports the service period for the time sensitive traffic and has negotiated the service period for the time sensitive traffic with the STA, or a reserved AP corresponding to the service period for the time sensitive traffic, or a scheduling AP corresponding to the service period for the time sensitive traffic. The non-scheduling AP corresponding to the service period for the time sensitive traffic is an AP that supports the service period for the time sensitive traffic but is not a member corresponding to the service period for the time sensitive traffic, that is, the non-scheduling AP corresponding to the service period for the time sensitive traffic supports the service period for the time sensitive traffic but has not negotiated the service period for the time sensitive traffic with the STA. Alternatively, the non-scheduling AP corresponding to the service period for the time sensitive traffic is a non-reserved AP corresponding to the service period for the time sensitive traffic, or a non-scheduling AP corresponding to the service period for the time sensitive traffic.

In the present disclosure, the service period for the time sensitive traffic includes an R-TWT SP. Likewise, the member STA corresponding to the service period for the time sensitive traffic includes a member STA corresponding to the R-TWT SP, the scheduling AP corresponding to the service period for the time sensitive traffic includes a scheduling AP corresponding to R-TWT SP, the non-member STA corresponding to the service period for the time sensitive traffic includes a non-member STA corresponding to the R-TWT SP, and the non-scheduling AP corresponding to the service period for the time sensitive traffic includes a non-scheduling AP corresponding to R-TWT SP.

In the present disclosure, an STA corresponding to a service period for non-time sensitive traffic is an STA that does not support the service period for the time sensitive traffic, and an AP corresponding to a service period for non-time sensitive traffic is an AP that does not support the service period for the time sensitive traffic. The STA corresponding to the service period for the non-time sensitive traffic includes an STA corresponding to the non-R-TWT SP, and the STA corresponding to the non-R-TWT SP is an STA that does not support the R-TWT SP. The AP corresponding to the service period for the non-time sensitive traffic includes an AP corresponding to the non-R-TWT SP, and the AP corresponding to the non-R-TWT SP is an AP that does not support the R-TWT SP.

In the present disclosure, a first member STA includes at least one of the non-member STA corresponding to the service period for the time sensitive traffic, the STA corresponding to the service period for the non-time sensitive traffic, or an STA that invokes a backoff procedure of an access category not corresponding to a traffic identifier of the service period for the time sensitive traffic. A first scheduling AP includes at least one of the non-scheduling AP corresponding to the service period for the time sensitive traffic, the AP corresponding to the service period for the non-time sensitive traffic, or an AP that invokes a backoff procedure of an access category not corresponding to a traffic identifier of the service period for the time sensitive traffic.

The STA that invokes the backoff procedure of the access category not corresponding to the traffic identifier of the service period for the time sensitive traffic includes an STA that is the member STA corresponding to the service period for the time sensitive traffic but invokes the backoff procedure of the access category not corresponding to the traffic identifier of the service period for the time sensitive traffic or an STA that is not the member STA corresponding to the service period for the time sensitive traffic but invokes the backoff procedure of the access category not corresponding to the traffic identifier of the service period for the time sensitive traffic. The AP that invokes the backoff procedure of the access category not corresponding to the traffic identifier of the service period for the time sensitive traffic includes an STA that is the scheduling AP corresponding to the service period for the time sensitive traffic but invokes the backoff procedure of the access category not corresponding to the traffic identifier of the service period for the time sensitive traffic or an STA that is not the scheduling AP corresponding to the service period for the time sensitive traffic but invokes the backoff procedure of the access category not corresponding to the traffic identifier of the service period for the time sensitive traffic.

The channel protection threshold is used for the scheduling AP corresponding to the service period for the time sensitive traffic and/or the member STA corresponding to the service period for the time sensitive traffic to prioritize gaining a TXOP and/or initiate transmission of time sensitive traffic data within the service period for the time sensitive traffic.

In some embodiments, the member STA corresponding to the service period for the time sensitive traffic is an STA related to the time sensitive traffic, and the scheduling AP corresponding to the service period for the time sensitive traffic is an AP related to the time sensitive traffic. The first member STA is an STA irrelated to the time sensitive traffic, and the first scheduling AP is an AP irrelated to the time sensitive traffic.

The STA related to the time sensitive traffic is an STA that is about to transmit time sensitive traffic data, an STA that needs to transmit time sensitive traffic data, or an STA that prepares to transmit time sensitive traffic data.

The AP related to the time sensitive traffic is an AP that is about to transmit time sensitive traffic data, an AP that needs to transmit time sensitive traffic data, or an AP that prepares to transmit time sensitive traffic data.

In some embodiments, a start time of the channel protection threshold is a start time of the service period for the time sensitive traffic, and a length of the channel protection threshold is an interframe space (IFS) or a sum of an IFS and a backoff time of the AP, and is negotiated by the AP and the STA.

In some embodiments, the channel protection threshold is determined in setting up the service period for the time sensitive traffic, and/or, the channel protection threshold is configured in announcing the service period for the time sensitive traffic, and/or, the channel protection threshold is transmitted in announcing the service period for the time sensitive traffic.

In some embodiments, the channel protection threshold is determined in setting up the R-TWT SP, and/or, the channel protection threshold is configured in announcing the R-TWT SP, and/or, the channel protection threshold is transmitted in announcing the R-TWT SP.

In summary, in the method according to the present disclosure, the AP that supports the service period for the time sensitive traffic transmits the channel protection threshold, such that the scheduling AP corresponding to the service period for the time sensitive traffic and/or the member STA corresponding to the service period for the time sensitive traffic prioritize gaining the TXOP and/or initiate transmission of time sensitive traffic data within the service period for the time sensitive traffic, and the STA that does not support the quite element is prevented from prioritizing gaining the TXOP and/or initiating transmission of time sensitive traffic data within the service period for the time sensitive traffic. Thus, data transmission within the service period for the time sensitive traffic by the scheduling AP corresponding to the service period for the time sensitive traffic and/or the member STA corresponding to the service period for the time sensitive traffic is prioritized, and the scheduling AP corresponding to the service period for the time sensitive traffic and/or the member STA corresponding to the service period for the time sensitive traffic prioritize transmitting data related to the time sensitive traffic within the service period for the time sensitive traffic.

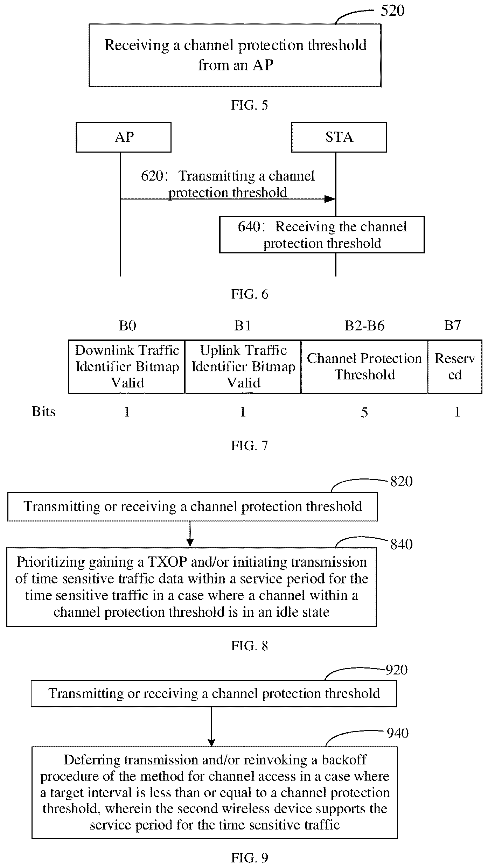

FIG. 5 is a schematic flowchart of a method for channel access according to some embodiments of the present disclosure. The embodiments are illustrated using an example where the method is performed by an STA that supports a service period for time sensitive traffic. The method includes at least part of the following process.

**In S520,** a channel protection threshold from an AP is received.

The AP is an AP that supports the service period for the time sensitive traffic, and includes a scheduling AP corresponding to the service period for the time sensitive traffic and/or a non-scheduling AP corresponding to the service period for the time sensitive traffic. The scheduling AP corresponding to the service period for the time sensitive traffic is an AP that supports the service period for the time sensitive traffic and has negotiated the service period for the time sensitive traffic with the STA, or a reserved AP corresponding to the service period for the time sensitive traffic, or a scheduling AP corresponding to the service period for the time sensitive traffic. The non-scheduling AP corresponding to the service period for the time sensitive traffic is an AP that supports the service period for the time sensitive traffic but is not a member corresponding to the service period for the time sensitive traffic, that is, the non-scheduling AP corresponding to the service period for the time sensitive traffic supports the service period for the time sensitive traffic but has not negotiated the service period for the time sensitive traffic with the STA. Alternatively, the non-scheduling AP corresponding to the service period for the time sensitive traffic is a non-reserved AP corresponding to the service period for the time sensitive traffic, or a non-scheduling AP corresponding to the service period for the time sensitive traffic.

Likewise, a member STA corresponding to the service period for the time sensitive traffic is an STA that supports the service period for the time sensitive traffic and has negotiated the service period for the time sensitive traffic with the AP, or a reserved STA corresponding to the service period for the time sensitive traffic, or a scheduled STA corresponding to the service period for the time sensitive traffic. The non-member STA corresponding to the service period for the time sensitive traffic is an STA that supports the service period for the time sensitive traffic but is not a member corresponding to the service period for the time sensitive traffic, that is, the non-member STA corresponding to the service period for the time sensitive traffic supports the service period for the time sensitive traffic but has not negotiated the service period for the time sensitive traffic with the AP. Alternatively, the non-member STA corresponding to the service period for the time sensitive traffic is a non-reserved STA corresponding to the service period for the time sensitive traffic, or a non-scheduled STA corresponding to the service period for the time sensitive traffic.

The channel protection threshold is used for the scheduling AP corresponding to the service period for the time sensitive traffic and/or the member STA corresponding to the service period for the time sensitive traffic to prioritize gaining a TXOP and/or initiate transmission of time sensitive traffic data within the service period for the time sensitive traffic.

In some embodiments, the member STA corresponding to the service period for the time sensitive traffic is an STA related to the time sensitive traffic, and the scheduling AP corresponding to the service period for the time sensitive traffic is an AP related to the time sensitive traffic.

The STA related to the time sensitive traffic is an STA that is about to transmit time sensitive traffic data, an STA that needs to transmit time sensitive traffic data, or an STA that prepares to transmit time sensitive traffic data.

The AP related to the time sensitive traffic is an AP that is about to transmit time sensitive traffic data, an AP that needs to transmit time sensitive traffic data, or an AP that prepares to transmit time sensitive traffic data.

In some embodiments, a start time of the channel protection threshold is a start time of the R-TWT SP, and a length of the channel protection threshold is an IFS or a sum of an IFS and a backoff time of the AP, and is negotiated by the AP and the STA.

In some embodiments, the channel protection threshold is determined in setting up the service period for the time sensitive traffic, and/or, the channel protection threshold is configured in announcing the service period for the time sensitive traffic, and/or, the channel protection threshold is transmitted in announcing the service period for the time sensitive traffic.

In some embodiments, the channel protection threshold is determined in setting up the R-TWT SP, and/or, the channel protection threshold is configured in announcing the R-TWT SP, and/or, the channel protection threshold is transmitted in announcing the R-TWT SP.

In summary, in the method according to the present disclosure, the AP that supports the service period for the time sensitive traffic transmits the channel protection threshold, such that the scheduling AP corresponding to the service period for the time sensitive traffic and/or the member STA corresponding to the service period for the time sensitive traffic prioritize gaining the TXOP and/or initiate transmission of time sensitive traffic data within the service period for the time sensitive traffic, and the STA that does not support the quite element is prevented from prioritizing gaining the TXOP and/or initiating transmission of time sensitive traffic data within the service period for the time sensitive traffic. Thus, data transmission within the service period for the time sensitive traffic by the scheduling AP corresponding to the service period for the time sensitive traffic and/or the member STA corresponding to the service period for the time sensitive traffic is prioritized, and the scheduling AP corresponding to the service period for the time sensitive traffic and/or the member STA corresponding to the service period for the time sensitive traffic prioritize transmit data related to the time sensitive traffic within the service period for the time sensitive traffic.

FIG. 6 is a schematic flowchart of a method for channel access according to some embodiments of the present disclosure. The embodiments are illustrated using an example where the method is performed by an AP that supports a service period for time sensitive traffic and an STA that supports a service period for time sensitive traffic. The method includes at least part of the following processes.

**In S620,** an AP transmits a channel protection threshold to an STA.

The AP is an AP that supports the service period for the time sensitive traffic, and includes a scheduling AP corresponding to the service period for the time sensitive traffic and/or a non-scheduling AP corresponding to the service period for the time sensitive traffic. The scheduling AP corresponding to the service period for the time sensitive traffic is an AP that supports the service period for the time sensitive traffic and has negotiated the service period for the time sensitive traffic with the STA, or a reserved AP corresponding to the service period for the time sensitive traffic, or a scheduling AP corresponding to the service period for the time sensitive traffic. The non-scheduling AP corresponding to the service period for the time sensitive traffic is an AP that supports the service period for the time sensitive traffic but is not a member corresponding to the service period for the time sensitive traffic, that is, the non-scheduling AP corresponding to the service period for the time sensitive traffic supports the service period for the time sensitive traffic but has not negotiated the service period for the time sensitive traffic with the STA. Alternatively, the non-scheduling AP corresponding to the service period for the time sensitive traffic is a non-reserved AP corresponding to the service period for the time sensitive traffic, or a non-scheduling AP corresponding to the service period for the time sensitive traffic.

The channel protection threshold is used for the scheduling AP corresponding to the service period for the time sensitive traffic and/or the member STA corresponding to the service period for the time sensitive traffic to prioritize gaining a TXOP and/or initiate transmission of time sensitive traffic data within the service period for the time sensitive traffic.

In some embodiments, the member STA corresponding to the service period for the time sensitive traffic is an STA related to the time sensitive traffic, and the scheduling AP corresponding to the service period for the time sensitive traffic is an AP related to the time sensitive traffic.

The STA related to the time sensitive traffic is an STA that is about to transmit time sensitive traffic data, an STA that needs to transmit time sensitive traffic data, or an STA that prepares to transmit time sensitive traffic data.

The AP related to the time sensitive traffic is an AP that is about to transmit time sensitive traffic data, an AP that needs to transmit time sensitive traffic data, or an AP that prepares to transmit time sensitive traffic data.

**In S640,** the STA receives the channel protection threshold from the AP.

The STA is an STA that supports the service period for the time sensitive traffic, and includes a member STA corresponding to the service period for the time sensitive traffic and/or a non-member STA corresponding to the service period for the time sensitive traffic. The member STA corresponding to the service period for the time sensitive traffic is an STA that supports the service period for the time sensitive traffic and has negotiated the service period for the time sensitive traffic with the AP, or a reserved STA corresponding to the service period for the time sensitive traffic, or a scheduled STA corresponding to the service period for the time sensitive traffic. The non-member STA corresponding to the service period for the time sensitive traffic is an STA that supports the service period for the time sensitive traffic but is not a member corresponding to the service period for the time sensitive traffic, that is, the non-member STA corresponding to the service period for the time sensitive traffic supports the service period for the time sensitive traffic but has not negotiated the service period for the time sensitive traffic with the AP. Alternatively, the non-member STA corresponding to the service period for the time sensitive traffic is a non-reserved STA corresponding to the service period for the time sensitive traffic, or a non-scheduled STA corresponding to the service period for the time sensitive traffic.

The channel protection threshold is carried in a Channel Protection Threshold field or a Channel Protection Threshold subfield. The Channel Protection Threshold field or the Channel Protection Threshold subfield is carried in a broadcast TWT element. The broadcast TWT element is carried in a management frame. The management frame includes at least one of a probe response frame, an association response frame, a reassociation response frame, a beacon frame, or an action frame.

In some embodiments, a start time of the channel protection threshold is a start time corresponding to the service period for the time sensitive traffic, and a length of the channel protection threshold is an interframe space (IFS) or a sum of an IFS and a backoff time of the AP, and is negotiated by the AP and the STA.

In some embodiments, the channel protection threshold is determined in setting up the service period for the time sensitive traffic, and/or, the channel protection threshold is configured in announcing the service period for the time sensitive traffic, and/or, the channel protection threshold is transmitted in announcing the service period for the time sensitive traffic.

In some embodiments, the channel protection threshold is determined in setting up the R-TWT SP, and/or, the channel protection threshold is configured in announcing the R-TWT SP, and/or, the channel protection threshold is transmitted in announcing the R-TWT SP.

In some embodiments, a unit of the channel protection threshold is a microsecond (µs) or a slot. Illustratively, referring to a parameter of the EDCA, a slot is equal to 9 µs.

In some embodiments, the Broadcast Channel Protection Threshold subfield is in a Traffic Information (Info) Control field of a Restricted TWT Traffic Info field in the Broadcast TWT Parameter Set field in the broadcast TWT element. A format of the Traffic Info Control field is shown in FIG. 7. A bit of a Downlink Traffic Identifier Bitmap Valid (DL TID Bitmap Valid) field is 1, and occupies a bit B0; a bit of an Uplink Traffic Identifier Bitmap Valid (UL TID Bitmap Valid) field is 1, and occupies a bit B1; bits of a Channel Protection Threshold field is 5, and occupies bits B2 to B6; and B7 is a Reserved bit, and bits is 1. B1 represent a first bit, B2 represent a second bit, and so on, which is not repeated again.

In some embodiments, the broadcast TWT element further indicates a category corresponding to the service period for the time sensitive traffic. The service period for the time sensitive traffic includes a trigger-enabled service period for the time sensitive traffic and/or a non-trigger-enabled service period for the time sensitive traffic.

In some embodiments, the channel protection threshold is further used for the scheduling AP corresponding to the service period for the time sensitive traffic and/or the member STA corresponding to the service period for the time sensitive traffic to prioritize gaining the TXOP and/or initiate the transmission of the time sensitive traffic data within the service period for the time sensitive traffic in a case where the channel within the channel protection threshold is in the idle state.

In some embodiments, the member STA corresponding to the service period for the time sensitive traffic invokes a backoff procedure of an access category corresponding to a traffic identifier of the service period for the time sensitive traffic. The traffic identifier of the service period for the time sensitive traffic includes an uplink traffic identifier of the service period for the time sensitive traffic and/or a downlink traffic identifier of the service period for the time sensitive traffic. The uplink traffic identifier of the service period for the time sensitive traffic includes an uplink traffic identifier of the R-TWT SP, and the downlink traffic identifier of the service period for the time sensitive traffic includes a downlink traffic identifier of the R-TWT SP.

In some embodiments, the scheduling AP corresponding to the service period for the time sensitive traffic invokes a backoff procedure of an access category corresponding to a traffic identifier of the service period for the time sensitive traffic, or starts contention for the TXOP of the channel to gain the TXOP and prioritize performing trigger-based uplink transmission on the time sensitive traffic data of the member STA corresponding to the service period for the time sensitive traffic. The traffic identifier of the service period for the time sensitive traffic includes an uplink traffic identifier of the service period for the time sensitive traffic and/or a downlink traffic identifier of the service period for the time sensitive traffic. The uplink traffic identifier of the service period for the time sensitive traffic includes an uplink traffic identifier of the R-TWT SP, and the downlink traffic identifier of the service period for the time sensitive traffic includes a downlink traffic identifier of the R-TWT SP.

In some embodiments, the channel protection threshold is further used for a first scheduling AP and/or a first member STA to defer the transmission and/or reinvoke a backoff procedure within the service period for the time sensitive traffic in a case where a target interval is less than or equal to the channel protection threshold.

The target interval is an interval between a first time and a second time. The first time is a start time of the service period for the time sensitive traffic, the second time is a time when a backoff counter corresponding to the backoff procedure backs off to 0 or data transmission is initiated, and the second time is within the service period for the time sensitive traffic. The method for channel access at the second time is the method for channel access performed by the scheduling AP corresponding to the service period for the time sensitive traffic and/or the member STA corresponding to the service period for the time sensitive traffic.

Deferring the transmission is suspending the transmission or delaying the transmission. For example, the data is the PPDU.

In some embodiments, the channel protection threshold is further used to check, at the time when the backoff counter corresponding to the backoff procedure invoked by the first scheduling AP and/or the first member STA backs off to 0 or the first scheduling AP and/or the first member STA start to initiate data transmission.

In the present disclosure, the method for channel access is a backoff-based method for channel access or a contention-based method for channel access, and is used to provide channel access transmission services with different priorities. The backoff procedure is the same as the backoff procedure, and refers to the procedure or process in which the STA or AP backs off based on the method for channel access.

In some embodiments, the method for channel access includes at least one of an EDCA, a distributed coordination function (DCF), or a hybrid coordination function (HCF).

In summary, in the method according to the present disclosure, the channel protection threshold is transmitted between the AP and the STA, such that the scheduling AP corresponding to the service period for the time sensitive traffic and/or the member STA corresponding to the service period for the time sensitive traffic prioritize gaining the TXOP and/or initiate transmission of time sensitive traffic data within the service period for the time sensitive traffic, and the member STA corresponding to the service period for the time sensitive traffic and the scheduling AP corresponding to the service period for the time sensitive traffic prioritize transmitting the time sensitive traffic. In addition, the STA that does not support the quite element is prevented from prioritizing gaining the TXOP and/or initiating transmission of time sensitive traffic data within the service period for the time sensitive traffic, such that data transmission within the service period for the time sensitive traffic by the scheduling AP corresponding to the service period for the time sensitive traffic and/or the member STA corresponding to the service period for the time sensitive traffic is prioritized, and the scheduling AP corresponding to the service period for the time sensitive traffic and/or the member STA corresponding to the service period for the time sensitive traffic prioritize transmitting data related to the time sensitive traffic within the service period for the time sensitive traffic.

The method for channel access by the STA and the AP in different categories of the service periods of the time sensitive traffic are detailed hereinafter.

### 1) The trigger-enabled service period for the time sensitive traffic

For the trigger-enabled service period for the time sensitive traffic, such as the trigger-enabled R-TWT SP, the AP starts, at the start time of the service period for the time sensitive traffic, contention for the TXOP of the channel to gain the TXOP, and prioritizes performing trigger-based uplink transmission on the time sensitive traffic data of the member STA corresponding to the service period for the time sensitive traffic. The AP transmits a trigger frame in a case where a wireless medium is in an idle state within the channel protection threshold in the BSS.

The service period for the time sensitive traffic is a TWT period for transmitting the time sensitive traffic data, for example, an R-TWT SP. The following embodiments are illustrated using an example of the R-TWT SP.
· A reserved time of the channel protection threshold is a reserved IFS in a case where the AP does not need to perform backoff in the BSS and the AP transmits a trigger frame when a wireless medium is in an idle state within the reserved IFS. The IFS is at least one of a point coordination function interframe space (PIFS), a distributed coordination function interframe space (DIFS), a short interframe space (SIFS), or an arbitration interframe space (AIFS).
· A reserved time of the channel protection threshold is a sum of an IFS and a backoff time of an AP in a case where the AP performs backoff in the BSS and the AP transmits a trigger frame until a transmission condition determined by the method for channel access is satisfied. The IFS is at least one of an AIFS, a PIFS, a DIFS, or a SIFS. The method for channel access includes at least one of an EDCA, a DCF, or an HCF.

The following methods are used to ensure that the AP gains the TXOP of the channel upon the start time of the service period for the time sensitive traffic.
(1) The AP informs the channel protection threshold to a non-AP STA. Specifically, a non-AP STA that supports the service period for the time sensitive traffic (for example, the R-TWT SP) acquires a channel idle time corresponding to a reserved channel protection threshold that is required for transmitting a trigger frame by the AP. Alternatively, for channel access within the service period for the time sensitive traffic, a rule is defined, such that the STA that supports the service period for the time sensitive traffic follows the channel protection threshold in performing the channel access. The AP adjusts a required length of a channel idle time prior to initiating transmission of the corresponding trigger frame based on the channel protection threshold.
(2) When the non-AP STA that supports the service period for the time sensitive traffic arrives at and/or spans or commences after the start time of the service period for the time sensitive traffic, in a case where an ongoing backoff procedure backs off to 0 within the service period for the time sensitive traffic (that is, a value of a backoff counter is 0), or transmission is initiated (a frame exchange sequence is initiated), whether the time interval between the time and the start time of the service period for the time sensitive traffic exceeds the channel protection threshold provided by the access point needs to be checked, and the following actions are performed:
   - in a case where the time interval between the time (that is, a time when the backoff procedure spans or commences after the start time of the service period for the time sensitive traffic, and backs off to 0 within the service period for the time sensitive traffic or transmission is initiated) and the start time of the service period for the time sensitive traffic is less than or equal to the channel protection threshold, the STA that supports the service period for the time sensitive traffic defers/delays transmission, and reinvokes the backoff procedure; and
   - in a case where the time interval between the time and the start time of the service period for the time sensitive traffic is greater than the channel protection threshold, transmission is normally performed in a case where the transmission condition determined by the method for channel access is satisfied. The method for channel access includes at least one of an EDCA, a DCF, or an HCF.

### 2) The non-trigger-enabled service period for the time sensitive traffic

For the non-trigger-enabled service period for the time sensitive traffic, such as the non-trigger-enabled R-TWT SP, the following methods are used to ensure that the member STA corresponding to the service period for the time sensitive traffic gains the TXOP of the channel upon the start of the service period for the time sensitive traffic to transmit the time sensitive traffic data (that is, the traffic data corresponding to the R-TWT UL TID).
(1) The AP informs the channel protection threshold to a non-AP STA. Specifically, a non-AP STA that supports the service period for the time sensitive traffic acquires reserved information of the channel protection threshold. Alternatively, for channel access within the service period for the time sensitive traffic, a rule is defined, such that the non-AP STA that supports the service period for the time sensitive traffic follows the channel protection threshold in performing the channel access.

In a case where the AP has no access category corresponding to the R-TWT DL TID in contending channel, the AP invokes an EDCA backoff procedure before a start time of an upcoming service period for the time sensitive traffic or before or after the start time of the delay-sensitive service period. The EDCA backoff procedure backs off to 0 or starts to initiate the transmission of the frame exchange sequence within the service period for the time sensitive traffic. In this case, the AP checks the time interval between the time when the EDCA backoff procedure backs off to 0 or the transmission of the frame exchange sequence is initiated and the start time of the service period for the time sensitive traffic. In a case where the time interval is less than a reserved channel protection threshold, the transmission is deferred or suspended, and a backoff procedure is reinvoked. The channel protection threshold for checking the time interval at the AP is the same as or different from the channel protection threshold for checking the time interval at the non-AP STA.

Illustratively, the channel protection threshold for checking the time interval at the AP is an IFS, or a sum of an IFS and the time of the backoff at the AP. For example, the IFS is at least one of an AIFS, a PIFS, a DIFS, or a SIFS.

Illustratively, the STA and the AP negotiates the channel protection threshold. For example, in setting up the R-TWT, the STA and the AP negotiates the channel protection thresholds for checking the time interval at the STA and the AP.

In a case where the AP has an access category corresponding to the R-TWT DL TID in contending channel, the AP invokes an EDCA backoff procedure of an access category not corresponding to the R-TWT DL TID before a start time of an upcoming service period for the time sensitive traffic or before or after the start time of the delay-sensitive service period. The EDCA backoff procedure backs off to 0 or starts to initiate the transmission of the frame exchange sequence within the service period for the time sensitive traffic. In this case, the AP checks the time interval between the time when the EDCA backoff procedure backs off to 0 or the transmission of the frame exchange sequence is initiated and the start time of the service period for the time sensitive traffic. In a case where the time interval is less than a reserved channel protection threshold, the transmission is deferred or suspended, and a backoff procedure is reinvoked. In particular, in a case where the AP invokes an EDCA backoff procedure of an access category corresponding to the R-TWT DL TID before a start time of an upcoming service period for the time sensitive traffic or before or after the start time of the delay-sensitive service period, and the EDCA backoff procedure backs off to 0 or starts to initiate the transmission of the frame exchange sequence within the service period for the time sensitive traffic, the AP does not need to check the time interval between the time when the EDCA backoff procedure backs off to 0 or the transmission of the frame exchange sequence is initiated and the start time of the service period for the time sensitive traffic, and directly starts to initiate transmission of the time sensitive traffic data (for example, business data corresponding to the R-TWT DL TID). The channel protection threshold for checking the time interval at the AP is the same as or different from the channel protection threshold for checking the time interval at the non-AP STA.

(2) When the non-AP STA that supports the service period for the time sensitive traffic but is not the member STA arrives at and/or spans or commences after the start time of the service period for the time sensitive traffic, in a case where an ongoing backoff procedure backs off to 0 at a time within the service period for the time sensitive traffic (that is, a value of a backoff counter corresponding to the backoff procedure is 0), or transmission is initiated (a frame exchange sequence is initiated), whether the time interval between the time and the start time of the service period for the time sensitive traffic exceeds the channel protection threshold provided by the access point needs to be checked, and perform the following actions:
- in a case where the time interval between the time (that is, a time when the backoff procedure spans or commences after the start time of the service period for the time sensitive traffic, and backs off to 0 within the service period for the time sensitive traffic or transmission is initiated) and the start time of the service period for the time sensitive traffic is less than or equal to the channel protection threshold, the non-AP STA defers/delays transmission, and reinvokes the backoff procedure; and
- in a case where the time interval between the time and the start time of the service period for the time sensitive traffic is greater than the channel protection threshold, transmission is normally performed in a case where the transmission condition determined by the method for channel access is satisfied. The method for channel access includes at least one of an EDCA, a DCF, or an HCF.

3) When the member STA corresponding to the service period for the time sensitive traffic arrives at and/or spans or commences after the start time of the service period for the time sensitive traffic, in a case where an ongoing backoff procedure exists, and the backoff procedure is a backoff procedure of an access category not corresponding to time sensitive traffic data (for example, an R-TWT UL TID), whether the time interval between the time and the start time of the service period for the time sensitive traffic exceeds the channel protection threshold provided by the access point needs to be checked in a case where the backoff procedure backs off to 0 at a time within the service period for the time sensitive traffic (that is, a value of a backoff counter corresponding to the backoff procedure is 0) or transmission is initiated (a frame exchange sequence is initiated), and perform the following actions:
· in a case where the time interval between the time (that is, a time when the backoff procedure spans or commences after the start time of the service period for the time sensitive traffic, and backs off to 0 within the service period for the time sensitive traffic or transmission is initiated) and the start time of the service period for the time sensitive traffic is less than or equal to the channel protection threshold, the STA that supports the service period for the time sensitive traffic defers transmission, and reinvokes the backoff procedure; and
· in a case where the time interval between the time and the start time of the service period for the time sensitive traffic is greater than the channel protection threshold, transmission is performed in a case where the transmission condition determined by the method for channel access is satisfied. The method for channel access includes at least one of an EDCA, a DCF, or an HCF.

When the member STA corresponding to the service period for the time sensitive traffic arrives at and/or spans or commences after the start time of the service period for the time sensitive traffic, in a case where an ongoing backoff procedure exists, and the backoff procedure is a backoff procedure of an access category corresponding to time sensitive traffic data (for example, an R-TWT UL TID), whether the time interval between the time and the start time of the service period for the time sensitive traffic exceeds the channel protection threshold provided by the access point does not need to be checked in a case where the backoff procedure backs off to 0 or transmission is initiated, and transmission is normally performed in a case where the transmission condition determined by the method for channel access is satisfied. The method for channel access includes at least one of an EDCA, a DCF, or an HCF.

FIG. 8 is a schematic flowchart of a method for channel access according to some embodiments of the present disclosure. The method is performed by a first wireless device, and includes at least part of the following processes.

**In S820,** a channel protection threshold is transmitted or received.

The channel protection threshold is used for the scheduling AP corresponding to the service period for the time sensitive traffic and/or the member STA corresponding to the service period for the time sensitive traffic to prioritize gaining a TXOP and/or initiate transmission of time sensitive traffic data within the service period for the time sensitive traffic.

A start time of the channel protection threshold is a start time of the service period for the time sensitive traffic.

In some embodiments, the service period for the time sensitive traffic is a trigger-enabled service period for the time sensitive traffic or a non-trigger-enabled service period for the time sensitive traffic.

In some embodiments, the channel protection threshold is an interframe space (IFS), or the channel protection threshold is a sum of an IFS and a backoff time of an AP.

In some embodiments, the channel protection threshold is negotiated by the AP and the STA.

The first wireless device supports the service period for the time sensitive traffic. The first wireless device is an AP or an STA.

In some embodiments, the first wireless device is a member STA corresponding to the service period for the time sensitive traffic and/or a scheduling AP corresponding to the service period for the time sensitive traffic.

In some embodiments, the first wireless device is correlated with the time sensitive traffic. That is, the first wireless device is correlated with the service period for the time sensitive traffic, or is correlated with the time sensitive traffic data.

In a case where the first wireless device is an AP, the first wireless device determines the channel protection threshold and transmits the channel protection threshold to an STA. The first wireless device includes at least one of a scheduling AP corresponding to the service period for the time sensitive traffic, an AP that invokes the backoff procedure of the access category corresponding to the traffic identifier of the service period for the time sensitive traffic, or an AP that starts contention for the TXOP of the channel to gain the TXOP and prioritizes performing trigger-based uplink transmission on the time sensitive traffic data of the member STA corresponding to the service period for the time sensitive traffic.

The scheduling AP corresponding to the service period for the time sensitive traffic is an AP that supports the service period for the time sensitive traffic and has negotiated the service period for the time sensitive traffic with the STA, or a reserved AP corresponding to the service period for the time sensitive traffic, or a scheduling AP corresponding to the service period for the time sensitive traffic. The scheduling AP corresponding to the service period for the time sensitive traffic includes a scheduling AP corresponding to the R-TWT SP.

The AP that invokes the backoff procedure of the access category corresponding to the traffic identifier of the service period for the time sensitive traffic is an AP that invokes the backoff procedure correlated with the time sensitive traffic data and is an AP correlated with the time sensitive traffic, and refers to an AP that is about to transmit time sensitive traffic data, an AP that needs to transmit time sensitive traffic data, or an AP that prepares to transmit time sensitive traffic data. The AP that invokes the backoff procedure of the access category corresponding to the traffic identifier of the service period for the time sensitive traffic is a scheduling AP corresponding to the service period for the time sensitive traffic or a non-scheduling AP corresponding to the service period for the time sensitive traffic.

In a case where the first wireless device is an STA, the first wireless device determines the channel protection threshold and receives the channel protection threshold from an AP. The first wireless device includes at least one of a member STA corresponding to the service period for the time sensitive traffic or an STA that invokes the backoff procedure of the access category corresponding to the traffic identifier of the service period for the time sensitive traffic

The member STA corresponding to the service period for the time sensitive traffic is an STA that supports the service period for the time sensitive traffic and has negotiated the service period for the time sensitive traffic with the AP, or a reserved STA corresponding to the service period for the time sensitive traffic, or a scheduled STA corresponding to the service period for the time sensitive traffic. The member STA corresponding to the service period for the time sensitive traffic includes a member STA corresponding to the R-TWT SP.

The STA that invokes the backoff procedure of the access category corresponding to the traffic identifier of the service period for the time sensitive traffic is an STA that invokes the backoff procedure correlated with the time sensitive traffic data and is an STA correlated with the time sensitive traffic, and refers to an STA that is about to transmit time sensitive traffic data, an STA that needs to transmit time sensitive traffic data, or an STA that prepares to transmit time sensitive traffic data. The STA that invokes the backoff procedure of the access category corresponding to the traffic identifier of the service period for the time sensitive traffic is a member STA corresponding to the service period for the time sensitive traffic or a non-member STA corresponding to the service period for the time sensitive traffic.

The channel protection threshold is carried in a Channel Protection Threshold field or a Channel Protection Threshold subfield. The Channel Protection Threshold field or the Channel Protection Threshold subfield is carried in a broadcast TWT element. The broadcast TWT element is carried in a management frame. The broadcast TWT element further indicates a type the R-TWT SP.

**In S840,** in a case where a channel within the channel protection threshold is in an idle state, the TXOP is prioritized gaining and/or the transmission of the time sensitive traffic data is initiated within the service period for the time sensitive traffic.

The channel is detected, the first wireless device directly gains the TXOP and/or initiates the transmission of the time sensitive traffic data within the service period for the time sensitive traffic in a case where a channel within the channel protection threshold is in an idle state, or the first wireless device gains the TXOP and/or initiates the transmission of the time sensitive traffic data within the service period for the time sensitive traffic in a case where the transmission condition of the method for channel access is satisfied. The method for channel access includes at least one of an EDCA, a DCF, or an HCF.

A start time of the channel protection threshold is coincident with a start time of the service period for the time sensitive traffic.

In summary, in the method according to the present disclosure, the channel protection threshold is transmitted between the AP and the STA, such that the scheduling AP corresponding to the service period for the time sensitive traffic and/or the member STA corresponding to the service period for the time sensitive traffic prioritize gaining the TXOP and/or initiate transmission of time sensitive traffic data within the service period for the time sensitive traffic, and the member STA corresponding to the service period for the time sensitive traffic and the scheduling AP corresponding to the service period for the time sensitive traffic prioritize transmitting the time sensitive traffic. In addition, the STA that does not support the quite element is prevented from prioritizing gaining the TXOP and/or initiating transmission of time sensitive traffic data within the service period for the time sensitive traffic, such that data transmission within the service period for the time sensitive traffic by the scheduling AP corresponding to the service period for the time sensitive traffic and/or the member STA corresponding to the service period for the time sensitive traffic is prioritized, and the scheduling AP corresponding to the service period for the time sensitive traffic and/or the member STA corresponding to the service period for the time sensitive traffic prioritize transmitting data related to the time sensitive traffic within the service period for the time sensitive traffic.

FIG. 9 is a schematic flowchart of a method for channel access according to some embodiments of the present disclosure. The method is performed by a second wireless device, and includes at least part of the following processes.

**In S920,** a channel protection threshold is transmitted or received.

The channel protection threshold is used for the scheduling AP corresponding to the service period for the time sensitive traffic and/or the member STA corresponding to the service period for the time sensitive traffic to prioritize gaining a TXOP and/or initiate transmission of time sensitive traffic data within the service period for the time sensitive traffic.

A start time of the channel protection threshold is a start time of the service period for the time sensitive traffic.

In some embodiments, the service period for the time sensitive traffic is a trigger-enabled service period for the time sensitive traffic or a non-trigger-enabled service period for the time sensitive traffic.

In some embodiments, the channel protection threshold is an interframe space (IFS), or the channel protection threshold is a sum of an IFS and a backoff time of an AP.

In some embodiments, the channel protection threshold is negotiated by the AP and the STA.

The second wireless device supports the service period for the time sensitive traffic. The second wireless device is an AP or an STA.

In some embodiments, the second wireless device is a non-member STA corresponding to the R-TWT and/or a non-scheduling AP corresponding to the R-TWT.

In some embodiments, the second wireless device is a non-member STA corresponding to the service period for the time sensitive traffic and/or a non-scheduling AP corresponding to the service period for the time sensitive traffic.

In some embodiments, the second wireless device is a member STA corresponding to the service period for the time sensitive traffic but invokes the backoff procedure of the access category not corresponding to the traffic identifier of the service period for the time sensitive traffic. Alternatively, the second wireless device is a scheduling AP corresponding to the service period for the time sensitive traffic but invokes the backoff procedure of the access category not corresponding to the traffic identifier of the service period for the time sensitive traffic.

In some embodiments, the second wireless device is uncorrelated with the time sensitive traffic. That is, the second wireless device is uncorrelated with the service period for the time sensitive traffic, or is uncorrelated with the time sensitive traffic data.

In a case where the second wireless device is an AP, the second wireless device determines the channel protection threshold and transmits the channel protection threshold to an STA. The second wireless device includes at least one of a non-scheduling AP corresponding to the service period for the time sensitive traffic or an AP that invokes the backoff procedure of the access category not corresponding to the traffic identifier of the service period for the time sensitive traffic.

The non-scheduling AP corresponding to the service period for the time sensitive traffic is an AP that supports the service period for the time sensitive traffic and has not negotiated the service period for the time sensitive traffic with the STA, or a non-reserved AP corresponding to the service period for the time sensitive traffic, or a non-scheduling AP corresponding to the service period for the time sensitive traffic. The non-scheduling AP corresponding to the service period for the time sensitive traffic includes a non-scheduling AP corresponding to the R-TWT SP.

The AP that invokes the backoff procedure of the access category not corresponding to the traffic identifier of the service period for the time sensitive traffic is an AP that invokes the backoff procedure uncorrelated with the time sensitive traffic data and is an AP uncorrelated with the time sensitive traffic, and refers to an AP that is not about to transmit time sensitive traffic data, an AP that does not need to transmit time sensitive traffic data, or an AP that does not prepare to transmit time sensitive traffic data. The AP that invokes the backoff procedure of the access category not corresponding to the traffic identifier of the service period for the time sensitive traffic is a scheduling AP corresponding to the service period for the time sensitive traffic or a non-scheduling AP corresponding to the service period for the time sensitive traffic.

In a case where the second wireless device is an STA, the second wireless device determines the channel protection threshold and receives the channel protection threshold from an AP. The second wireless device includes at least one of a non-member STA corresponding to the service period for the time sensitive traffic or an STA that invokes the backoff procedure of the access category not corresponding to the traffic identifier of the service period for the time sensitive traffic

The non-member STA corresponding to the service period for the time sensitive traffic is an STA that supports the service period for the time sensitive traffic and has not negotiated the service period for the time sensitive traffic with the AP, or a non-reserved STA corresponding to the service period for the time sensitive traffic, or a non-scheduled STA corresponding to the service period for the time sensitive traffic. The non-member STA corresponding to the service period for the time sensitive traffic includes a non-member STA corresponding to the R-TWT SP.

The STA that invokes the backoff procedure of the access category not corresponding to the traffic identifier of the service period for the time sensitive traffic is an STA that invokes the backoff procedure uncorrelated with the time sensitive traffic data and is an STA uncorrelated with the time sensitive traffic, and refers to an STA that is not about to transmit time sensitive traffic data, an STA that does not need to transmit time sensitive traffic data, or an STA that does not prepare to transmit time sensitive traffic data. The STA that invokes the backoff procedure of the access category not corresponding to the traffic identifier of the service period for the time sensitive traffic is a member STA corresponding to the service period for the time sensitive traffic or a non-member STA corresponding to the service period for the time sensitive traffic.

The channel protection threshold is carried in a Channel Protection Threshold field or a Channel Protection Threshold subfield. The Channel Protection Threshold field or the Channel Protection Threshold subfield is carried in a broadcast TWT element. The broadcast TWT element is carried in a management frame. The broadcast TWT element further indicates a type the R-TWT SP.

**In S940,** in a case where a target interval is less than or equal to a channel protection threshold, transmission is deferred and/or a backoff procedure is reinvoked within a service period for time sensitive traffic

The channel is detected, and the second wireless device defers the transmission and/or reinvokes the backoff procedure within the service period for the time sensitive traffic in a case where the target interval is less than or equal to the channel protection threshold. The backoff procedure is a backoff procedure of the method for channel access. The method for channel access involves at least one of an EDCA, a DCF, or an HCF.

The target interval is an interval between a first time and a second time. The first time is a start time of the service period for the time sensitive traffic, the second time is a time when a backoff counter corresponding to the backoff procedure backs off to 0 or data transmission is initiated, and the second time is within the service period for the time sensitive traffic.

A start time of the target interval and a start time of the channel protection threshold are coincident with a start time of the service period for the time sensitive traffic.

In summary, in the method according to the present disclosure, the channel protection threshold is transmitted between the AP and the STA, such that the scheduling AP corresponding to the service period for the time sensitive traffic and/or the member STA corresponding to the service period for the time sensitive traffic prioritize gaining the TXOP and/or initiate transmission of time sensitive traffic data within the service period for the time sensitive traffic, and the member STA corresponding to the service period for the time sensitive traffic and the scheduling AP corresponding to the service period for the time sensitive traffic prioritize transmitting the time sensitive traffic. In addition, the STA that does not support the quite element is prevented from prioritizing gaining the TXOP and/or initiating transmission of time sensitive traffic data within the service period for the time sensitive traffic, such that data transmission within the service period for the time sensitive traffic by the scheduling AP corresponding to the service period for the time sensitive traffic and/or the member STA corresponding to the service period for the time sensitive traffic is prioritized, and the scheduling AP corresponding to the service period for the time sensitive traffic and/or the member STA corresponding to the service period for the time sensitive traffic prioritize transmitting data related to the time sensitive traffic within the service period for the time sensitive traffic.

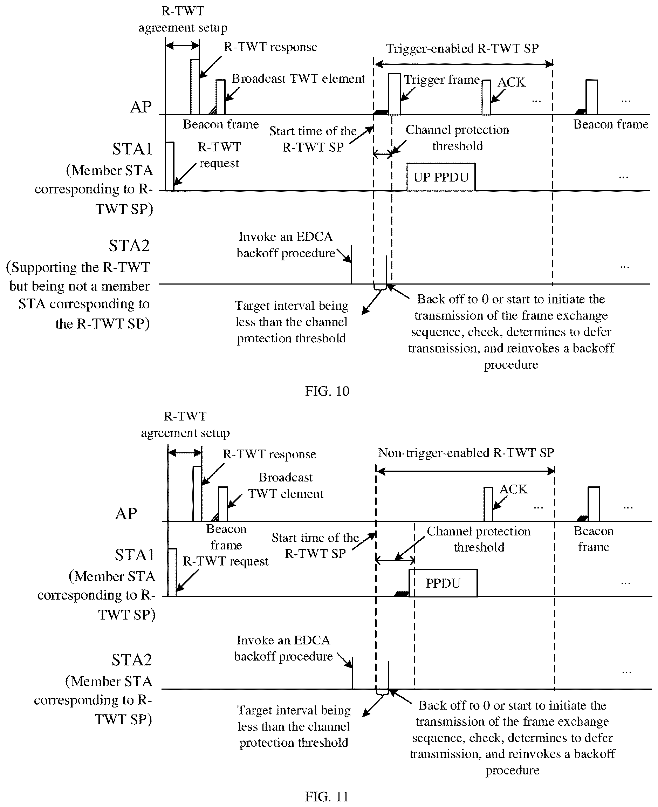

FIG. 10 is a schematic diagram of a method for channel access according to some embodiments of the present disclosure. In FIG. 10, STA1 and STA2 are associated with the AP. STA1 and the AP negotiate to set up an agreement of the service period for the time sensitive traffic. Using an example where the service period for the time sensitive traffic is an R-TWT SP, STA1 and the AP negotiate to set up an R-TWT agreement, and thus, STA1 becomes a member STA corresponding to the R-TWT SP. The R-TWT SP is a trigger-enabled R-TWT SP. The AP broadcasts information of the R-TWT SP by carrying the broadcast TWT element in the management frame (including at least one of a beacon frame, a probe response frame, an association acknowledgement frame, a reassociation response frame, or an action frame). The broadcast TWT element carries reserved information of the channel protection threshold. STA2 supports the R-TWT but is not a member STA corresponding to the R-TWT SP (that is, STA2 has not negotiated to establish the R-TWT agreement with the AP). STA2 supports the R-TWT, and thus STA2 acquires the information of the R-TWT SP.

STA2 invokes an EDCA backoff procedure before a start time of an upcoming R-TWT SP or before or after the start time of the R-TWT SP. The backoff process backs off to 0 or starts to initiate the transmission of the frame exchange sequence within the R-TWT SP. In this case, STA2 checks the time interval between the time when the backoff procedure backs off to 0 or the transmission of the frame exchange sequence is initiated and the start time of the service period for the time sensitive traffic. In a case where the time interval is less than a channel protection threshold reserved by the AP, STA2 defers or suspends the transmission, and reinvokes a backoff procedure.

The AP starts to contend for the channel to gain the TXOP upon the start of the R-TWT SP. Although STA2 first backs off to 0 upon the start of the R-TWT SP, the transmission is deferred or suspended due to the constraint of the channel protection threshold, and thus the channel is not gained. Thus, the AP successfully gains the TXOP within the R-TWT SP, and prioritizes triggering the uplink transmission on the time sensitive traffic data of the member STA (for example, the STA1) of the R-TWT SP.

In summary, in the method according to the present disclosure, the channel protection threshold is transmitted between the AP and the STA, such that the first member STA corresponding to the service period for the time sensitive traffic defers gaining the TXOP and/or initiating transmission of time sensitive traffic data, and the scheduling AP corresponding to the service period for the time sensitive traffic prioritize transmitting time sensitive traffic data within the service period for the time sensitive traffic.

FIG. 11 is a schematic diagram of a method for channel access according to some embodiments of the present disclosure. In FIG. 11, STA1 and STA2 are associated with the AP. STA1 and the AP negotiate to set up an agreement of the service period for the time sensitive traffic. Using an example where the service period for the time sensitive traffic is an R-TWT SP, STA1 and the AP negotiate to set up an R-TWT agreement, and thus, STA1 becomes a member STA corresponding to the R-TWT SP. The R-TWT SP is a non-trigger-enabled R-TWT SP. The AP broadcasts information of the R-TWT SP by carrying the broadcast TWT element in the management frame (including at least one of a beacon frame, a probe response frame, an association acknowledgement frame, a reassociation response frame, and an action frame). The broadcast TWT element carries reserved information of the channel protection threshold. STA2 supports the R-TWT but is not a member STA corresponding to the R-TWT SP (that is, STA2 has not negotiated to establish the R-TWT agreement with the AP). STA2 supports the R-TWT, and thus STA2 acquires the information of the R-TWT SP.

STA2 invokes an EDCA backoff procedure before a start time of an upcoming R-TWT SP or before or after the start time of the R-TWT SP. The backoff process spans or commences after the start time of the R-TWT SP, and backs off to 0 or starts to initiate the transmission of the frame exchange sequence within the R-TWT SP. In this case, STA2 checks the time interval between the time when the backoff procedure backs off to 0 or the transmission of the frame exchange sequence is initiated and the start time of the service period for the time sensitive traffic. In a case where the time interval is less than a channel protection threshold reserved by the AP, STA2 defers or suspends the transmission, and reinvokes a backoff procedure.

STA1 starts to contend for the channel to gain the TXOP upon the start of the start time of the R-TWT SP. Although STA2 first backs off to 0 upon the start of the R-TWT SP, the transmission is deferred or suspended due to the constraint of the channel protection threshold, and thus the channel is not gained. Thus, STA1 successfully gains the TXOP within the R-TWT SP, and starts the transmission on the time sensitive traffic data.

In summary, in the method according to the present disclosure, the channel protection threshold is transmitted between the AP and the STA, such that the first member STA corresponding to the service period for the time sensitive traffic defers gaining the TXOP and/or initiating transmission of time sensitive traffic data, and the scheduling AP/STA corresponding to the service period for the time sensitive traffic prioritize transmitting time sensitive traffic data within the service period for the time sensitive traffic.

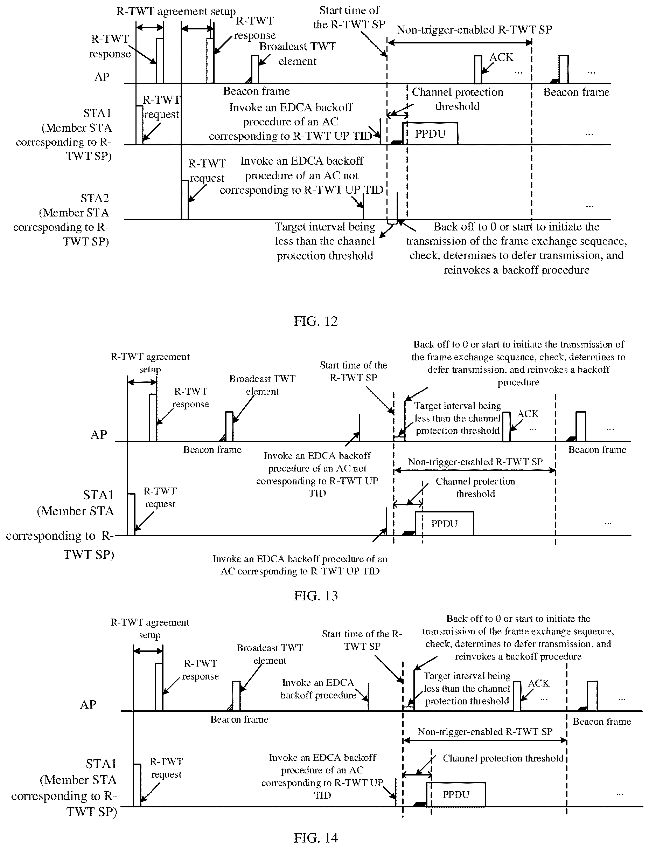

FIG. 12 is a schematic diagram of a method for channel access according to some embodiments of the present disclosure. In FIG. 12, STA1 and STA2 are associated with the AP. STA1 and STA2 negotiate to set up an agreement of the service period for the time sensitive traffic with the AP. Using an example where the service period for the time sensitive traffic is an R-TWT SP, STA1 and STA2 negotiate to set up an R-TWT agreement with the AP respectively, and thus, STA1 and STA2 become member STAs of the R-TWT SP. The R-TWT SP is a non-trigger-enabled R-TWT SP. The AP broadcasts information of the R-TWT SP by carrying the broadcast TWT element in the management frame (including at least one of a beacon frame, a probe response frame, an association acknowledgement frame, a reassociation response frame, and an action frame). The broadcast TWT element carries reserved information of the channel protection threshold.

STA2 invokes an EDCA backoff procedure of the access category not corresponding to the traffic identifier of the service period for the time sensitive traffic before the start time of the R-TWT SP. For example, the traffic identifier of the service period for the time sensitive traffic is an R-TWT UL TID. The backoff process spans or commences after the start time of the R-TWT SP, and backs off to 0 or starts to initiate the transmission of the frame exchange sequence within the R-TWT SP. In this case, STA2 checks the time interval between the time when the backoff procedure backs off to 0 or the transmission of the frame exchange sequence is initiated and the start time of the R-TWT SP. In a case where the time interval is less than a channel protection threshold reserved by the AP, STA2 defers or suspends the transmission, and reinvokes a backoff procedure.

STA1 invokes the EDCA backoff procedure of the access category corresponding to the traffic identifier of the service period for the time sensitive traffic (for example, the R-TWT UL TID) near the start time of the R-TWT SP, and contends for the channel to gain the TXOP. As STA1 invokes the EDCA backoff procedure of the access category corresponding to the R-TWT UL TID, STA1 does not need to check the time interval between the time when the backoff procedure backs off to 0 or the transmission of the frame exchange sequence is initiated and the start time of the R-TWT SP. Thus, STA1 successfully gains the TXOP within the R-TWT SP, and starts the transmission on the time sensitive traffic data (for example, business data corresponding to the R-TWT UL TID).

In summary, in the method according to the present disclosure, the channel protection threshold is transmitted between the AP and the STA, such that the STA with the backoff procedure of the access category not corresponding to the traffic identifier of the service period for the time sensitive traffic (for example, the R-TWT TID) defers gaining the TXOP and/or initiating transmission of time sensitive traffic data, and the STA with the backoff procedure of the access category corresponding to the R-TWT TID prioritizes transmitting time sensitive traffic data.

FIG. 13 is a schematic diagram of a method for channel access according to some embodiments of the present disclosure. In FIG. 13, STA1 is associated with the AP. STA1 and the AP negotiate to set up an agreement of the service period for the time sensitive traffic. Using an example where the service period for the time sensitive traffic is an R-TWT SP, STA1 and the AP negotiate to set up an R-TWT agreement, and thus, STA1 becomes a member STA corresponding to the R-TWT SP. The R-TWT SP is a non-trigger-enabled R-TWT SP. The AP broadcasts information of the R-TWT SP by carrying the broadcast TWT element in the management frame (including at least one of a beacon frame, a probe response frame, an association acknowledgement frame, a reassociation response frame, and an action frame). The broadcast TWT element carries reserved information of the channel protection threshold.

The AP invokes an EDCA backoff procedure of the access category not corresponding to the traffic identifier of the service period for the time sensitive traffic before a start time of an upcoming R-TWT SP or before or after the start time of the R-TWT SP. For example, the traffic identifier of the service period for the time sensitive traffic is an R-TWT DL TID. The backoff process backs off to 0 or starts to initiate the transmission of the frame exchange sequence within the R-TWT SP. In this case, the AP checks the time interval between the time when the backoff procedure backs off to 0 or the transmission of the frame exchange sequence is initiated and the start time of the service period for the time sensitive traffic. In a case where the time interval is less than a channel protection threshold reserved by the AP, the AP defers or suspends the transmission, and reinvokes a backoff procedure.

In a case where the AP invokes an EDCA backoff procedure of the access category corresponding to the traffic identifier of the service period for the time sensitive traffic (for example, the R-TWT DL TID) before a start time of an upcoming R-TWT SP or before or after the start time of the R-TWT SP, and the backoff process backs off to 0 or starts to initiate the transmission of the frame exchange sequence within the R-TWT SP, the AP does not need to check the time interval between the time when the backoff procedure backs off to 0 or the transmission of the frame exchange sequence is initiated and the start time of the R-TWT SP, and directly transmits the time sensitive traffic data (for example, business data corresponding to the R-TWT DL TID). The channel protection threshold for checking the time interval at the AP is the same as or different from the channel protection threshold for checking the time interval at the non-AP STA.

STA1 invokes the EDCA backoff procedure of the access category corresponding to the R-TWT UL TID near the start time of the R-TWT SP, and contends for the channel to gain the TXOP. As STA1 invokes the EDCA backoff procedure of the access category corresponding to the R-TWT UL TID, STA1 does not need to check the time interval between the time when the backoff procedure backs off to 0 or the transmission of the frame exchange sequence is initiated and the start time of the R-TWT SP. Thus, STA1 successfully gains the TXOP within the R-TWT SP, and starts the transmission on the time sensitive traffic data (for example, business data corresponding to the R-TWT UL TID).

In summary, in the method according to the present disclosure, the channel protection threshold is transmitted between the AP and the STA, such that the STA with the backoff procedure of the access category not corresponding to the traffic identifier of the service period for the time sensitive traffic (for example, the R-TWT TID) defers gaining the TXOP and/or initiating transmission of time sensitive traffic data, and the STA with the backoff procedure of the access category corresponding to the R-TWT TID prioritizes transmitting time sensitive traffic data.

FIG. 14 is a schematic diagram of a method for channel access according to some embodiments of the present disclosure. In FIG. 14, STA1 is associated with the AP. STA1 and the AP negotiate to set up an agreement of the service period for the time sensitive traffic. Using an example where the service period for the time sensitive traffic is an R-TWT SP, STA1 and the AP negotiate to set up an R-TWT agreement, and thus, STA1 becomes a member STA corresponding to the R-TWT SP. The R-TWT SP is a non-trigger-enabled R-TWT SP. The AP broadcasts information of the R-TWT SP by carrying the broadcast TWT element in the management frame (including at least one of a beacon frame, a probe response frame, an association acknowledgement frame, a reassociation response frame, and an action frame). The broadcast TWT element carries reserved information of the channel protection threshold.

The AP invokes an EDCA backoff procedure before a start time of an upcoming R-TWT SP or before or after the start time of the R-TWT SP. For example, the traffic identifier of the service period for the time sensitive traffic is an R-TWT DL TID. The backoff process backs off to 0 or starts to initiate the transmission of the frame exchange sequence within the R-TWT SP. In this case, the AP checks the time interval between the time when the backoff procedure backs off to 0 or the transmission of the frame exchange sequence is initiated and the start time of the service period for the time sensitive traffic. In a case where the time interval is less than a channel protection threshold reserved by the AP, the AP defers or suspends the transmission, and reinvokes a backoff procedure. The channel protection threshold for checking the time interval at the AP is the same as or different from the channel protection threshold for checking the time interval at the non-AP STA.

STA1 invokes the EDCA backoff procedure of the access category corresponding to the R-TWT UL TID near the start time of the R-TWT SP, and contends for the channel to gain the TXOP. As STA1 invokes the EDCA backoff procedure of the access category corresponding to the R-TWT UL TID, STA1 does not need to check the time interval between the time when the backoff procedure backs off to 0 or the transmission of the frame exchange sequence is initiated and the start time of the R-TWT SP. Thus, STA1 successfully gains the TXOP within the R-TWT SP, and starts the transmission on the time sensitive traffic data (for example, traffic data corresponding to the R-TWT UL TID).

In summary, in the method according to the present disclosure, the channel protection threshold is transmitted between the AP and the STA, such that the STA with the backoff procedure of the access category not corresponding to the traffic identifier of the service period for the time sensitive traffic (for example, the R-TWT TID) defers gaining the TXOP and/or initiating transmission of time sensitive traffic data, and the STA with the backoff procedure of the access category corresponding to the R-TWT TID prioritizes transmitting time sensitive traffic data.

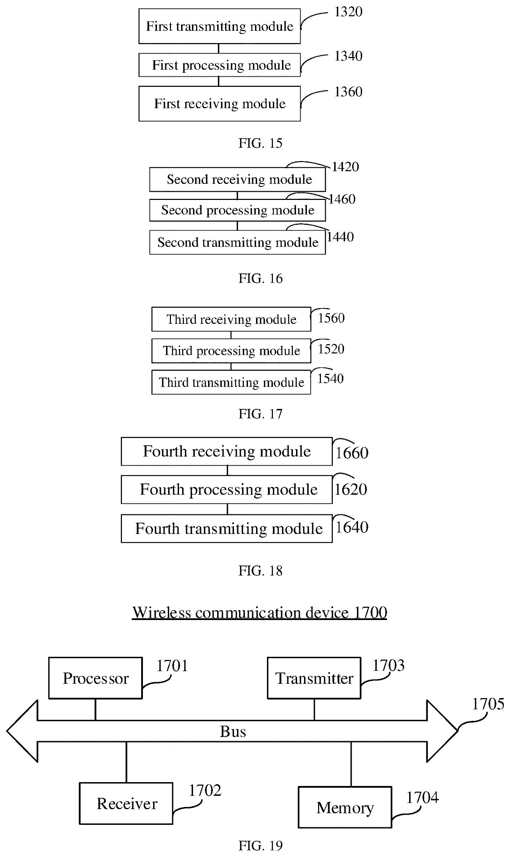

FIG. 15 is a block diagram of an apparatus for channel access according to some embodiments of the present disclosure. The apparatus includes at least part of a first transmitting module 1320, a first processing module 1340, and a first receiving module 1360.

The first transmitting module 1320 is configured to transmit a channel protection threshold to an STA, wherein the channel protection threshold is used for a scheduling AP corresponding to a service period for time sensitive traffic and/or a member STA corresponding to the service period for the time sensitive traffic to prioritize gaining a TXOP and/or initiate transmission of time sensitive traffic data within the service period for the time sensitive traffic. The apparatus supports the service period for the time sensitive traffic.

In some embodiments, the channel protection threshold is further used for the scheduling AP corresponding to the service period for the time sensitive traffic and/or the member STA corresponding to the service period for the time sensitive traffic to prioritize gaining the TXOP and/or initiate the transmission of the time sensitive traffic data within the service period for the time sensitive traffic in a case where a channel within the channel protection threshold is in an idle state.

In some embodiments, a scheduling AP corresponding to the service period for the time sensitive traffic invokes a backoff procedure of an access category corresponding to a traffic identifier of the service period for the time sensitive traffic, or starts contention for the TXOP of the channel to gain the TXOP, and prioritize performing trigger-based uplink transmission on the time sensitive traffic data of the member STA corresponding to the service period for the time sensitive traffic; and/or
the member STA corresponding to the service period for the time sensitive traffic invokes a backoff procedure of an access category corresponding to a traffic identifier of the service period for the time sensitive traffic.

In some embodiments, the channel protection threshold is further used for a first scheduling AP and/or a first member STA to defer the transmission and/or reinvoke a backoff procedure within the service period for the time sensitive traffic in a case where a target interval is less than or equal to the channel protection threshold,
wherein the target interval is an interval between a first time and a second time, wherein the first time is a start time of the service period for the time sensitive traffic, the second time is a time when a backoff counter corresponding to the backoff procedure backs off to 0 or data transmission is initiated, the second time is within the service period for the time sensitive traffic, and the backoff procedure is invoked by the first scheduling AP and/or the first member STA.

In some embodiments, the first scheduling AP is a non-scheduling AP corresponding to the service period for the time sensitive traffic; or
the first scheduling AP is a scheduling AP corresponding to the service period for the time sensitive traffic, the service period for the time sensitive traffic is a non-trigger-enabled service period for the time sensitive traffic, and the first scheduling AP invokes a backoff procedure of an access category not corresponding to a traffic identifier of the service period for the time sensitive traffic.

In some embodiments, the first member STA is a non-member STA corresponding to the service period for the time sensitive traffic; or
the first member STA is a member STA corresponding to the service period for the time sensitive traffic, and the first member STA invokes a backoff procedure of an access category not corresponding to a traffic identifier of the service period for the time sensitive traffic.

In some embodiments, the channel protection threshold is an IFS, or the channel protection threshold is a sum of an IFS and a backoff time of an AP.

In some embodiments, the service period for the time sensitive traffic is a trigger-enabled service period for the time sensitive traffic or a non-trigger-enabled service period for the time sensitive traffic.

In some embodiments, the channel protection threshold is negotiated by the AP and the STA.

In some embodiments, the service period for the time sensitive traffic is a non-trigger-enabled service period for the time sensitive traffic.

In some embodiments, the channel protection threshold is carried in a Channel Protection Threshold field or a Channel Protection Threshold subfield.

In some embodiments, the Channel Protection Threshold field or the Channel Protection Threshold subfield is carried in a broadcast TWT element.

In some embodiments, the broadcast TWT element is carried in a management frame.

In some embodiments, the broadcast TWT element further indicates a type the service period for the time sensitive traffic.

In some embodiments, a start time of the channel protection threshold is coincident with a start time of the service period for the time sensitive traffic.

In some embodiments, the apparatus further includes the first processing module 1340, configured to determine or negotiate the channel protection threshold.

In some embodiments, the backoff procedure is a backoff procedure corresponding to the method for channel access, and the method for channel access includes at least one of an EDCA, a DCF, or an HCF.

In some embodiments, the apparatus further includes the first receiving module 1360, configured to receive the time sensitive traffic data transmitted by the STA based on the channel protection threshold.

In some embodiments, the first processing module 1340 is further configured to prioritize gaining the TXOP and/or initiate the transmission of the time sensitive traffic data within the service period for the time sensitive traffic in a case where the channel within the channel protection threshold is in the idle state; or, the first processing module 1340 is further configured to defer the transmission and/or reinvoke a backoff procedure within the service period for the time sensitive traffic in a case where a target interval is less than or equal to the channel protection threshold.

In summary, the apparatus according to the present disclosure supports the service period for the time sensitive traffic. Based on the transmitted the channel protection threshold, the scheduling AP corresponding to the service period for the time sensitive traffic and/or the member STA corresponding to the service period for the time sensitive traffic prioritize gaining the TXOP and/or initiate transmission of time sensitive traffic data within the service period for the time sensitive traffic, and the STA that does not support the quite element is prevented from prioritizing gaining the TXOP and/or initiating transmission of time sensitive traffic data within the service period for the time sensitive traffic. Thus, data transmission within the service period for the time sensitive traffic by the scheduling AP corresponding to the service period for the time sensitive traffic and/or the member STA corresponding to the service period for the time sensitive traffic is prioritized.

FIG. 16 is a block diagram of an apparatus for channel access according to some embodiments of the present disclosure. The apparatus includes at least part of a second receiving module 1420, a second transmitting module 1440, and a second processing module 1460.

The second receiving module 1420 is configured to receive a channel protection threshold from an AP, wherein the channel protection threshold is used for a scheduling AP corresponding to the service period for the time sensitive traffic and/or a member STA corresponding to the service period for the time sensitive traffic to prioritize gaining a transmission opportunity (TXOP) and/or initiate transmission of time sensitive traffic data within the service period for the time sensitive traffic. The apparatus supports the service period for the time sensitive traffic.

In some embodiments, the channel protection threshold is further used for the scheduling AP corresponding to the service period for the time sensitive traffic and/or the member STA corresponding to the service period for the time sensitive traffic to prioritize gaining the TXOP and/or initiate the transmission of the time sensitive traffic data within the service period for the time sensitive traffic in a case where a channel within the channel protection threshold is in an idle state.

In some embodiments, the scheduling AP corresponding to the service period for the time sensitive traffic invokes a backoff procedure of an access category corresponding to a traffic identifier of the service period for the time sensitive traffic, or starts contention for the TXOP of the channel to gain the TXOP, and prioritizes transmitting trigger-based uplink transmission on the time sensitive traffic data of the member STA corresponding to the service period for the time sensitive traffic; and/or
the member STA corresponding to the service period for the time sensitive traffic invokes a backoff procedure of an access category corresponding to a traffic identifier of the service period for the time sensitive traffic.

In some embodiments, the channel protection threshold is further used for a first scheduling AP and/or a first member STA to defer the transmission and/or reinvoke a backoff procedure within the service period for the time sensitive traffic in a case where a target interval is less than or equal to the channel protection threshold,
wherein the target interval is an interval between a first time and a second time, wherein the first time is a start time of the service period for the time sensitive traffic, the second time is a time when a backoff counter corresponding to the backoff procedure backs off to 0 or data transmission is initiated, the second time is within the service period for the time sensitive traffic, and the backoff procedure is invoked by the first scheduling AP and/or the first member STA.

In some embodiments, the first scheduling AP is a non-scheduling AP corresponding to the service period for the time sensitive traffic; or
the first scheduling AP is a scheduling AP corresponding to the service period for the time sensitive traffic, the service period for the time sensitive traffic is a non-trigger-enabled service period for the time sensitive traffic, and the first scheduling AP invokes a backoff procedure of an access category not corresponding to a traffic identifier of the service period for the time sensitive traffic.

In some embodiments, the first member STA is a non-member STA corresponding to the service period for the time sensitive traffic; or
the first member STA is a member STA corresponding to the service period for the time sensitive traffic, and the first member STA invokes a backoff procedure of an access category not corresponding to a traffic identifier of the service period for the time sensitive traffic.

In some embodiments, the channel protection threshold is an IFS, or the channel protection threshold is a sum of an IFS and a backoff time of an AP.

In some embodiments, the service period for the time sensitive traffic is a trigger-enabled service period for the time sensitive traffic or a non-trigger-enabled service period for the time sensitive traffic.

In some embodiments, the channel protection threshold is negotiated by the AP and the STA.

In some embodiments, the service period for the time sensitive traffic is a non-trigger-enabled service period for the time sensitive traffic.

In some embodiments, the channel protection threshold is carried in a Channel Protection Threshold field or a Channel Protection Threshold subfield.

In some embodiments, the Channel Protection Threshold field or the Channel Protection Threshold subfield is carried in a broadcast TWT element.

In some embodiments, the broadcast TWT element is carried in a management frame.

In some embodiments, the broadcast TWT element further indicates a type of the service period for the time sensitive traffic.

In some embodiments, a start time of the channel protection threshold is coincident with a start time of the service period for the time sensitive traffic.

In some embodiments, the apparatus further includes the second transmitting module 1440, configured to transmit the time sensitive traffic data transmitted to the AP based on the channel protection threshold.

In some embodiments, the apparatus further includes the second processing module 1460, configured to prioritize gaining the TXOP and/or initiate the transmission of the time sensitive traffic data within the service period for the time sensitive traffic in a case where the channel within the channel protection threshold is in the idle state; or, the second processing module 1460 is further configured to defer the transmission and/or reinvoke a backoff procedure within the service period for the time sensitive traffic in a case where a target interval is less than or equal to the channel protection threshold.

In some embodiments, the apparatus further includes the second processing module 1460, configured to determine or negotiate the channel protection threshold.

In summary, the apparatus according to the present disclosure supports the service period for the time sensitive traffic. Based on the received the channel protection threshold, the scheduling AP corresponding to the service period for the time sensitive traffic and/or the member STA corresponding to the service period for the time sensitive traffic prioritize gaining the TXOP and/or initiate transmission of time sensitive traffic data within the service period for the time sensitive traffic, and the STA that does not support the quite element is prevented from prioritizing gaining the TXOP and/or initiating transmission of time sensitive traffic data within the service period for the time sensitive traffic. Thus, data transmission within the service period for the time sensitive traffic by the scheduling AP corresponding to the service period for the time sensitive traffic and/or the member STA corresponding to the service period for the time sensitive traffic is prioritized.

FIG. 17 is a block diagram of an apparatus for channel access according to some embodiments of the present disclosure. The apparatus includes at least part of a third processing module 1520, a third transmitting module 1540, and a third receiving module 1560.

The third processing module 1520 is configured to prioritize gaining a TXOP and/or initiating transmission of time sensitive traffic data within a service period for the time sensitive traffic in a case where a channel within a channel protection threshold is in an idle state,
wherein the apparatus supports the service period for the time sensitive traffic, and the channel protection threshold is used for a scheduling AP corresponding to the service period for the time sensitive traffic and/or a member STA corresponding to the service period for the time sensitive traffic to prioritize gaining the TXOP and/or initiate the transmission of the time sensitive traffic data within the service period for the time sensitive traffic.

In some embodiments, the third processing module 1520 is further configured to determine the channel protection threshold.

In some embodiments, the apparatus further includes the third transmitting module 1540, configured to transmit the channel protection threshold to an STA.

In some embodiments, the apparatus further includes the third receiving module 1560, configured to receive the channel protection threshold from an AP.

In some embodiments, the channel protection threshold is an IFS, or the channel protection threshold is a sum of an IFS and a backoff time of an AP.

In some embodiments, the service period for the time sensitive traffic is a trigger-enabled service period for the time sensitive traffic or a non-trigger-enabled service period for the time sensitive traffic.

In some embodiments, the channel protection threshold is negotiated by an AP and an STA.

In some embodiments, the third processing module 1520 is further configured to negotiate the channel protection threshold with an AP and an STA.

In some embodiments, the service period for the time sensitive traffic is a non-trigger-enabled service period for the time sensitive traffic.

In some embodiments, the channel protection threshold is carried in a Channel Protection Threshold field or a Channel Protection Threshold subfield.

In some embodiments, the Channel Protection Threshold field or the Channel Protection Threshold subfield is carried in a broadcast TWT element.

In some embodiments, the broadcast TWT element is carried in a management frame.

In some embodiments, the broadcast TWT element further indicates a type the service period for the time sensitive traffic.

In some embodiments, a start time of the channel protection threshold is coincident with a start time of the service period for the time sensitive traffic.

In some embodiments, the first wireless device includes at least one of the following items:
the first wireless device is the scheduling AP corresponding to the service period for the time sensitive traffic;
the first wireless device is the member STA corresponding to the service period for the time sensitive traffic; or
the first wireless device invokes a backoff procedure of an access category corresponding to a traffic identifier of the service period for the time sensitive traffic, or starts contention for the TXOP of the channel to gain the TXOP, and prioritizes performing trigger-based uplink transmission on the time sensitive traffic data of the member STA corresponding to the service period for the time sensitive traffic.

In some embodiments, the third transmitting module 1540 is further configured to transmit the time sensitive traffic data transmitted to the STA based on the channel protection threshold.

In some embodiments, the third receiving module 1560 is further configured to receive the time sensitive traffic data transmitted from an AP based on the channel protection threshold.

In summary, in the apparatus according to the present disclosure, the channel protection threshold is transmitted between the AP and the STA, such that the scheduling AP corresponding to the service period for the time sensitive traffic and/or the member STA corresponding to the service period for the time sensitive traffic prioritize gaining the TXOP and/or initiate transmission of time sensitive traffic data within the service period for the time sensitive traffic, and the member STA corresponding to the service period for the time sensitive traffic and the scheduling AP corresponding to the service period for the time sensitive traffic prioritize acquiring the time sensitive traffic. In addition, the STA that does not support the quite element is prevented from prioritizing gaining the TXOP and/or initiating transmission of time sensitive traffic data within the service period for the time sensitive traffic, such that data transmission within the service period for the time sensitive traffic by the scheduling AP corresponding to the service period for the time sensitive traffic and/or the member STA corresponding to the service period for the time sensitive traffic is prioritized.

FIG. 18 is a block diagram of an apparatus for channel access according to some embodiments of the present disclosure. The apparatus includes at least part of a fourth processing module 1620, a fourth transmitting module 1640, and a fourth receiving module 1660.

The fourth processing module 1620 is configured to defer transmission and/or reinvoke a backoff procedure within a service period for time sensitive traffic in a case where a target interval is less than or equal to a channel protection threshold,

wherein the apparatus supports the service period for the time sensitive traffic, the channel protection threshold is used for a scheduling AP corresponding to the service period for the time sensitive traffic and/or a member STA corresponding to the service period for the time sensitive traffic to prioritize gaining a TXOP and/or initiate transmission of time sensitive traffic data within the service period for the time sensitive traffic, the target interval is an interval between a first time and a second time, wherein the first time is a start time of the service period for the time sensitive traffic, the second time is a time when a backoff counter corresponding to the backoff procedure backs off to 0 or data transmission is initiated, and the second time is within the service period for the time sensitive traffic.

In some embodiments, the fourth processing module 1620 is configured to determine the channel protection threshold.

In some embodiments, the apparatus further includes the fourth transmitting module 1640, configured to transmit the channel protection threshold to an STA.

In some embodiments, the apparatus further includes the fourth receiving module 1660, configured to receive the channel protection threshold from an AP.

In some embodiments, the channel protection threshold is an IFS, or the channel protection threshold is a sum of an IFS and a backoff time of an AP.

In some embodiments, the service period for the time sensitive traffic is a trigger-enabled service period for the time sensitive traffic or a non-trigger-enabled service period for the time sensitive traffic.

In some embodiments, the channel protection threshold is negotiated by an AP and an STA.

In some embodiments, the fourth processing module 1620 is further configured to negotiate the channel protection threshold with an AP and an STA.

In some embodiments, the service period for the time sensitive traffic is a non-trigger-enabled service period for the time sensitive traffic.

In some embodiments, the channel protection threshold is carried in a Channel Protection Threshold field or a Channel Protection Threshold subfield.

In some embodiments, the Channel Protection Threshold field or the Channel Protection Threshold subfield is carried in a broadcast TWT element.

In some embodiments, the broadcast TWT element is carried in a management frame.

In some embodiments, the broadcast TWT element further indicates a type the service period for the time sensitive traffic.

In some embodiments, a start time of the channel protection threshold is coincident with a start time of the service period for the time sensitive traffic.

In some embodiments, the second wireless device includes at least one of the following items:
the first wireless device is a non-scheduling AP corresponding to the service period for the time sensitive traffic;
the second wireless device is a non-member STA corresponding to the service period for the time sensitive traffic; or
the second wireless device invokes a backoff procedure of an access category corresponding to a traffic identifier of the service period for the time sensitive traffic.

In some embodiments, the fourth transmitting module 1640 is further configured to transmit the time sensitive traffic data transmitted to the STA based on the channel protection threshold.

In some embodiments, the fourth receiving module 1660 is further configured to receive the time sensitive traffic data transmitted from an AP based on the channel protection threshold.

In summary, in the apparatus according to the present disclosure, the channel protection threshold is transmitted between the AP and the STA, such that the scheduling AP corresponding to the service period for the time sensitive traffic and/or the member STA corresponding to the service period for the time sensitive traffic prioritize gaining the TXOP and/or initiate transmission of time sensitive traffic data within the service period for the time sensitive traffic, and the member STA corresponding to the service period for the time sensitive traffic and the scheduling AP corresponding to the service period for the time sensitive traffic prioritize transmitting the time sensitive traffic. In addition, the STA that does not support the quite element is prevented from prioritizing gaining the TXOP and/or initiating transmission of time sensitive traffic data within the service period for the time sensitive traffic, such that data transmission within the service period for the time sensitive traffic by the scheduling AP corresponding to the service period for the time sensitive traffic and/or the member STA corresponding to the service period for the time sensitive traffic is prioritized.

It should be noted that, in a case where the apparatus according to the above embodiments implements the functions thereof, the division of the functional modules is merely exemplary. In practice, the above functions may be assigned to and completed by different functional modules according to actual needs, that is, the internal structure of the apparatus may be divided into different functional modules, to implement all or a part of the above functions.

With regard to the apparatus in the above embodiments, the specific scheme in which each module performs the operation has been described in detail in the embodiments related to the method and will not be described in detail herein.

FIG. 19 is a schematic structural diagram of a wireless communication device (an AP or an STA) according to some embodiments of the present disclosure. The wireless communication device 1700 includes: a processor 1701, a receiver 1702, a transmitter 1703, a memory 1704, and a bus 1705.

The processor 1701 includes one or more processing cores, and achieves various functional applications and information processing by running software programs and modules. In some embodiments, the processor 1701 is configured to perform the functions and processes of the first processing module 1340 and/or the second processing module 1460 and/or the third processing module 1520 and/or the fourth processing module 1620.

The receiver 1702 and the transmitter 1703 are practiced as a communication assembly. The communication assembly is a communication chip. In some embodiments, the receiver 1702 is configured to perform the functions and processes of the first receiving module 1360 and/or the second receiving module 1420 and/or the third receiving module 1560 and/or the fourth receiving module 1660. In some embodiments, the transmitter 1703 is configured to perform the functions and processes of the first transmitting module 1320 and/or the second transmitting module 1440 and/or the third transmitting module 1540 and/or the fourth transmitting module 1640.

The memory 1704 is connected to the processor 1701 over the bus 1705. The memory 1704 is configured to store one or more instructions, and the processor 1701 is configured to load and execute the one or more instructions to perform various processes in the above method embodiments.

In addition, the memory 1704 is practiced by any type of volatile or non-volatile storage device or combinations thereof. The volatile or non-volatile storage device includes but is not limited to a disk or optical disc, an electrically erasable programmable read-only memory (EEPROM), an erasable programmable read-only memory (EPROM), a static random-access memory (SRAM), a read-only memory (ROM), a magnetic memory, a flash memory, or a programmable read-only memory (PROM).

In some embodiments, the receiver 1702 separately receive signals/data, or the processor 1701 controls the receiver 1702 to receive signals/data, or the processor 1701 requests the receiver 1702 to receive signals/data, or the processor 1701 cooperates with the receiver 1702 to receive signals/data.

In some embodiments, the transmitter 1703 separately transmit signals/data, or the processor 1701 controls the transmitter 1703 to transmit signals/data, or the processor 1701 requests the transmitter 1703 to transmit signals/data, or the processor 1701 cooperates with the transmitter 1703 to transmit signals/data.

Some embodiments of the present disclosure further provide a computer-readable storage medium storing one or more programs, wherein the one or more programs, when loaded and run by a processor, cause the processor to perform the method for channel access.

Some embodiments of the present disclosure further provide a chip. The chip includes programmable logic circuity and/or program instructions, wherein the chip, when running on a communication device, is caused to perform the method for channel access.

Some embodiments of the present disclosure further provide a computer program product. The computer program product, when loading and executing on a processor of a computer device, cause the computer device to perform the method for channel access.

Some embodiments of the present disclosure further provide a computer program. The computer program includes one or more computer instructions, wherein the one or more computer instructions, when loaded and executed by a processor of a computer device, cause the computer device to perform the method for channel access.

It should be understood by those skilled in the art that in the above one or more embodiments, functions described in the embodiments of the present disclosure are practiced by the hardware, the software, the firmware or any combinations thereof. In a case where the functions are practiced by the software, the functions are stored in the computer-readable storage medium or are determined as one or more instructions or codes in the computer-readable storage medium for transmission. The computer-readable storage medium includes a computer storage medium and a communication medium, and the communication medium includes any medium facilitating transmission of the computer program from one place to another place. The storage medium is any available medium accessible by a general or specific computer.

Described above are merely exemplary embodiments of the present disclosure, and are not intended to limit the present disclosure. Any modifications, equivalent replacements, improvements and the like made within the spirit and principles of the present disclosure should be encompassed within the scope of protection of the present disclosure.

## Claims

1. A method for channel access, performed by an access point (AP) that supports a service period for time sensitive traffic, the method comprising:
transmitting a channel protection threshold to a station (STA), wherein the channel protection threshold is used for a scheduling AP corresponding to the service period for the time sensitive traffic and/or a member STA corresponding to the service period for the time sensitive traffic to prioritize gaining a transmission opportunity (TXOP) and/or initiate transmission of time sensitive traffic data within the service period for the time sensitive traffic.

2. The method according to claim 1, wherein the channel protection threshold is further used for the scheduling AP corresponding to the service period for the time sensitive traffic and/or the member STA corresponding to the service period for the time sensitive traffic to prioritize gaining the TXOP and/or initiate the transmission of the time sensitive traffic data within the service period for the time sensitive traffic in a case where a channel within the channel protection threshold is in an idle state.

3. The method according to claim 2, further comprising:
starting, by the scheduling AP corresponding to the service period for the time sensitive traffic, contention for the TXOP of the channel to gain the TXOP, and prioritizing performing trigger-based uplink transmission on the time sensitive traffic data of the member STA corresponding to the service period for the time sensitive traffic; and/or
invoking, by the member STA corresponding to the service period for the time sensitive traffic, a backoff procedure of an access category corresponding to a traffic identifier of the service period for the time sensitive traffic.

4. The method according to claim 1, wherein the channel protection threshold is further used for a first scheduling AP and/or a first member STA to defer the transmission and/or reinvoke a backoff procedure within the service period for the time sensitive traffic in a case where a target interval is less than or equal to the channel protection threshold, wherein the target interval is an interval between a first time and a second time, wherein the first time is a start time of the service period for the time sensitive traffic, the second time is a time when a backoff counter corresponding to the backoff procedure backs off to 0 or data transmission is initiated, the second time is within the service period for the time sensitive traffic, and the backoff procedure is invoked by the first scheduling AP and/or the first member STA.

5. The method according to claim 1 or 4, wherein the channel protection threshold is further used to check, at the time when the backoff counter corresponding to the backoff procedure invoked by the first scheduling AP and/or the first member STA backs off to 0 or the first scheduling AP and/or the first member STA start to initiate data transmission, whether the target interval is greater than the channel protection threshold within the service period for the time sensitive traffic, wherein the target interval is an interval between a first time and a second time, wherein the first time is a start time of the service period for the time sensitive traffic, the second time is the time when the backoff counter corresponding to the backoff procedure backs off to 0 or data transmission is initiated, and the second time is within the service period for the time sensitive traffic.

6. The method according to claim 4 or 5, wherein
the first scheduling AP is a non-scheduling AP corresponding to the service period for the time sensitive traffic; or the first scheduling AP is a scheduling AP corresponding to the service period for the time sensitive traffic, the service period for the time sensitive traffic is a non-trigger-enabled service period for the time sensitive traffic, and the first scheduling AP invokes a backoff procedure of an access category not corresponding to a traffic identifier of the service period for the time sensitive traffic.

7. The method according to claim 4 or 5, wherein
the first member STA is a non-member STA corresponding to the service period for the time sensitive traffic; or
the first member STA is a member STA corresponding to the service period for the time sensitive traffic, and the first member STA invokes a backoff procedure of an access category not corresponding to a traffic identifier of the service period for the time sensitive traffic.

8. The method according to any one of claims 1 to 7, wherein the channel protection threshold is an interframe space (IFS), or the channel protection threshold is a sum of an IFS and a backoff time of an AP.

9. The method according to claim 8, wherein the service period for the time sensitive traffic is a trigger-enabled service period for the time sensitive traffic or a non-trigger-enabled service period for the time sensitive traffic.

10. The method according to claim 9, wherein in a case where the service period for the time sensitive traffic is the trigger-enabled service period for the time sensitive traffic, the channel protection threshold is further used for the scheduling AP corresponding to the service period for the time sensitive traffic to prioritize gaining the TXOP and/or initiate the transmission of the time sensitive traffic data within the service period for the time sensitive traffic in a case where the channel within the channel protection threshold is in the idle state.

11. The method according to claim 9 or 10, wherein in a case where the service period for the time sensitive traffic is the non-trigger-enabled service period for the time sensitive traffic, the channel protection threshold is further used for the member STA corresponding to the service period for the time sensitive traffic to prioritize gaining the TXOP and/or initiate the transmission of the time sensitive traffic data within the service period for the time sensitive traffic in a case where the channel within the channel protection threshold is in the idle state.

12. The method according to any one of claims 1 to 7, wherein the channel protection threshold is negotiated by the AP and the STA.

13. The method according to claim 12, wherein the service period for the time sensitive traffic is a non-trigger-enabled service period for the time sensitive traffic.

14. The method according to any one of claims 1 to 13, wherein the channel protection threshold is carried in a Channel Protection Threshold field or a Channel Protection Threshold subfield.

15. The method according to claim 14, wherein the Channel Protection Threshold field or the Channel Protection Threshold subfield is carried in a broadcast target wake time (TWT) element.

16. The method according to claim 15, wherein the broadcast TWT element is carried in a management frame.

17. The method according to claim 15 or 16, wherein the broadcast TWT element further indicates a type of the service period for the time sensitive traffic.

18. The method according to any one of claims 1 to 17, wherein a start time of the channel protection threshold is coincident with a start time of the service period for the time sensitive traffic.

19. The method according to any one of claims 3 to 17, wherein the backoff procedure is a backoff procedure corresponding to the method for channel access, and the method for channel access comprises at least one of an enhanced distributed channel access (EDCA), a distributed coordination function (DCF), or a hybrid coordination function (HCF).

20. The method according to any one of claims 1 to 19, wherein the service period for the time sensitive traffic comprises a restricted target wake time (TWT) service period.

21. A method for channel access, performed by a station (STA) that supports a service period for time sensitive traffic, the method comprising:
receiving a channel protection threshold from an access point (AP), wherein the channel protection threshold is used for a scheduling AP corresponding to the service period for the time sensitive traffic and/or a member STA corresponding to the service period for the time sensitive traffic to prioritize gaining a transmission opportunity (TXOP) and/or initiate transmission of time sensitive traffic data within the service period for the time sensitive traffic.

22. The method according to claim 21, wherein the channel protection threshold is further used for the scheduling AP corresponding to the service period for the time sensitive traffic and/or the member STA corresponding to the service period for the time sensitive traffic to prioritize gaining the TXOP and/or initiate the transmission of the time sensitive traffic data within the service period for the time sensitive traffic in a case where a channel within the channel protection threshold is in an idle state.

23. The method according to claim 22, further comprising:
starting, by the scheduling AP corresponding to the service period for the time sensitive traffic, contention for the TXOP of the channel to gain the TXOP, and prioritizing performing trigger-based uplink transmission on the time sensitive traffic data of the member STA corresponding to the service period for the time sensitive traffic; and/or
invoking, by the member STA corresponding to the service period for the time sensitive traffic, a backoff procedure of an access category corresponding to a traffic identifier of the service period for the time sensitive traffic.

24. The method according to claim 21, wherein the channel protection threshold is further used for a first scheduling AP and/or a first member STA to defer the transmission and/or reinvoke a backoff procedure within the service period for the time sensitive traffic in a case where a target interval is less than or equal to the channel protection threshold, wherein the target interval is an interval between a first time and a second time, wherein the first time is a start time of the service period for the time sensitive traffic, the second time is a time when a backoff counter corresponding to the backoff procedure backs off to 0 or data transmission is initiated, the second time is within the service period for the time sensitive traffic, and the backoff procedure is invoked by the first scheduling AP and/or the first member STA.

25. The method according to claim 21 or 24, wherein the channel protection threshold is further used to check, at the time when the backoff counter corresponding to the backoff procedure invoked by the first scheduling AP and/or the first member STA backs off to 0 or the first scheduling AP and/or the first member STA start to initiate data transmission, whether the target interval is greater than the channel protection threshold within the service period for the time sensitive traffic, wherein the target interval is an interval between a first time and a second time, wherein the first time is a start time of the service period for the time sensitive traffic, the second time is the time when the backoff counter corresponding to the backoff procedure backs off to 0 or data transmission is initiated, and the second time is within the service period for the time sensitive traffic.

26. The method according to claim 24 or 25, wherein
the first scheduling AP is a non-scheduling AP corresponding to the service period for the time sensitive traffic; or
the first scheduling AP is a scheduling AP corresponding to the service period for the time sensitive traffic, the service period for the time sensitive traffic is a non-trigger-enabled service period for the time sensitive traffic, and the first scheduling AP invokes a backoff procedure of an access category not corresponding to a traffic identifier of the service period for the time sensitive traffic.

27. The method according to claim 24 or 25, wherein
the first member STA is a non-member STA corresponding to the service period for the time sensitive traffic; or
the first member STA is a member STA corresponding to the service period for the time sensitive traffic, and the first member STA invokes a backoff procedure of an access category not corresponding to a traffic identifier of the service period for the time sensitive traffic.

28. The method according to any one of claims 21 to 27, wherein the channel protection threshold is an interframe space (IFS), or the channel protection threshold is a sum of an IFS and a backoff time of an AP.

29. The method according to claim 28, wherein the service period for the time sensitive traffic is a trigger-enabled service period for the time sensitive traffic or a non-trigger-enabled service period for the time sensitive traffic.

30. The method according to claim 29, wherein in a case where the service period for the time sensitive traffic is the trigger-enabled service period for the time sensitive traffic, the channel protection threshold is further used for the scheduling AP corresponding to the service period for the time sensitive traffic to prioritize gaining the TXOP and/or initiate the transmission of the time sensitive traffic data within the service period for the time sensitive traffic in a case where the channel within the channel protection threshold is in the idle state.

31. The method according to claim 29 or 30, wherein in a case where the service period for the time sensitive traffic is the non-trigger-enabled service period for the time sensitive traffic, the channel protection threshold is further used for the member STA corresponding to the service period for the time sensitive traffic to prioritize gaining the TXOP and/or initiate the transmission of the time sensitive traffic data within the service period for the time sensitive traffic in a case where the channel within the channel protection threshold is in the idle state.

32. The method according to any one of claims 21 to 27, wherein the channel protection threshold is negotiated by the AP and the STA.

33. The method according to claim 32, wherein the service period for the time sensitive traffic is a non-trigger-enabled service period for the time sensitive traffic.

34. The method according to any one of claims 21 to 33, wherein the channel protection threshold is carried in a Channel Protection Threshold field or a Channel Protection Threshold subfield.

35. The method according to claim 34, wherein the Channel Protection Threshold field or the Channel Protection Threshold subfield is carried in a broadcast target wake time (TWT) element.

36. The method according to claim 35, wherein the broadcast TWT element is carried in a management frame.

37. The method according to claim 35 or 36, wherein the broadcast TWT element further indicates a type the service period for the time sensitive traffic.

38. The method according to any one of claims 21 to 37, wherein a start time of the channel protection threshold is coincident with a start time of the service period for the time sensitive traffic.

39. The method according to any one of claims 23 to 37, wherein the backoff procedure is a backoff procedure corresponding to the method for channel access, and the method for channel access comprises at least one of an enhanced distributed channel access (EDCA), a distributed coordination function (DCF), or a hybrid coordination function (HCF).

40. The method according to any one of claims 21 to 39, wherein the service period for the time sensitive traffic comprises a restricted target wake time (TWT) service period.

41. A method for channel access, performed by a first wireless device, the method comprising:
prioritizing gaining a transmission opportunity (TXOP) and/or initiating transmission of time sensitive traffic data within a service period for the time sensitive traffic in a case where a channel within a channel protection threshold is in an idle state, wherein the first wireless device supports the service period for the time sensitive traffic, and the channel protection threshold is used for a scheduling access point (AP) corresponding to the service period for the time sensitive traffic and/or a member station (STA) corresponding to the service period for the time sensitive traffic to prioritize gaining the TXOP and/or initiate the transmission of the time sensitive traffic data within the service period for the time sensitive traffic.

42. The method according to claim 41, wherein
the channel protection threshold is determined by the first wireless device; and
prior to prioritizing gaining the TXOP and/or initiating the transmission of the time sensitive traffic data within the service period for the time sensitive traffic in a case where the channel within the channel protection threshold is in the idle state, the method further comprises:
transmitting the channel protection threshold to an STA.

43. The method according to claim 41, wherein prior to prioritizing gaining the TXOP and/or initiating the transmission of the time sensitive traffic data within the service period for the time sensitive traffic in a case where the channel within the channel protection threshold is in the idle state, the method further comprises:
receiving the channel protection threshold from an AP.

44. The method according to any one of claims 41 to 43, wherein the channel protection threshold is an interframe space (IFS), or the channel protection threshold is a sum of an IFS and a backoff time of an AP.

45. The method according to claim 44, wherein the service period for the time sensitive traffic is a trigger-enabled service period for the time sensitive traffic or a non-trigger-enabled service period for the time sensitive traffic.

46. The method according to claim 45, wherein in a case where the service period for the time sensitive traffic is the trigger-enabled service period for the time sensitive traffic, the channel protection threshold is further used for the scheduling AP corresponding to the service period for the time sensitive traffic to prioritize gaining the TXOP and/or initiate the transmission of the time sensitive traffic data within the service period for the time sensitive traffic in a case where the channel within the channel protection threshold is in the idle state.

47. The method according to claim 45 or 46, wherein in a case where the service period for the time sensitive traffic is the non-trigger-enabled service period for the time sensitive traffic, the channel protection threshold is further used for the member STA corresponding to the service period for the time sensitive traffic to prioritize gaining the TXOP and/or initiate the transmission of the time sensitive traffic data within the service period for the time sensitive traffic in a case where the channel within the channel protection threshold is in the idle state.

48. The method according to any one of claims 41 to 43, wherein the channel protection threshold is negotiated by an AP and an STA.

49. The method according to claim 48, wherein the service period for the time sensitive traffic is a non-trigger-enabled service period for the time sensitive traffic.

50. The method according to any one of claims 41 to 49, wherein the channel protection threshold is carried in a Channel Protection Threshold field or a Channel Protection Threshold subfield.

51. The method according to claim 50, wherein the Channel Protection Threshold field or the Channel Protection Threshold subfield is carried in a broadcast target wake time (TWT) element.

52. The method according to claim 51, wherein the broadcast TWT element is carried in a management frame.

53. The method according to claim 51 or 52, wherein the broadcast TWT element further indicates a type the service period for the time sensitive traffic.

54. The method according to any one of claims 41 to 53, wherein a start time of the channel protection threshold is coincident with a start time of the service period for the time sensitive traffic.

55. The method according to any one of claims 41 to 54, wherein the first wireless device comprises at least one of the following items:
the first wireless device is the scheduling AP corresponding to the service period for the time sensitive traffic;
the first wireless device is the member STA corresponding to the service period for the time sensitive traffic; or
the first wireless device invokes a backoff procedure of an access category corresponding to a traffic identifier of the service period for the time sensitive traffic.

56. The method according to any one of claims 41 to 55, wherein the service period for the time sensitive traffic comprises a restricted target wake time (TWT) service period.

57. A method for channel access, performed by a second wireless device, the method comprising:
deferring transmission and/or reinvoking a backoff procedure within a service period for time sensitive traffic in a case where a target interval is less than or equal to a channel protection threshold, wherein the second wireless device supports the service period for the time sensitive traffic, the channel protection threshold is used for a scheduling access point (AP) corresponding to the service period for the time sensitive traffic and/or a member station (STA) corresponding to the service period for the time sensitive traffic to prioritize gaining a transmission opportunity (TXOP) and/or initiate transmission of time sensitive traffic data within the service period for the time sensitive traffic, the target interval is an interval between a first time and a second time, wherein the first time is a start time of the service period for the time sensitive traffic, the second time is a time when a backoff counter corresponding to the backoff procedure backs off to 0 or data transmission is initiated, and the second time is within the service period for the time sensitive traffic.

58. The method according to claim 57, wherein prior to deferring transmission and/or reinvoking the backoff procedure within the service period for the time sensitive traffic in a case where the target interval is less than or equal to the channel protection threshold, the method further comprises:
checking, at the time when the backoff counter corresponding to the backoff procedure invoked by the second wireless device backs off to 0 or the second wireless device starts to initiate data transmission, whether the target interval is greater than the channel protection threshold within the service period for the time sensitive traffic.

59. The method according to claim 57 or 58, wherein
the channel protection threshold is determined by the second wireless device; and
prior to deferring transmission and/or reinvoking the backoff procedure within the service period for the time sensitive traffic in a case where the target interval is less than or equal to the channel protection threshold, the method further comprises:
transmitting the channel protection threshold to an STA.

60. The method according to claim 57 or 58, wherein prior to deferring transmission and/or reinvoking the backoff procedure within the service period for the time sensitive traffic in a case where the target interval is less than or equal to the channel protection threshold, the method further comprises:
receiving the channel protection threshold from an AP.

61. The method according to any one of claims 57 to 60, wherein the channel protection threshold is an interframe space (IFS), or the channel protection threshold is a sum of an IFS and a backoff time of an AP.

62. The method according to claim 61, wherein the service period for the time sensitive traffic is a trigger-enabled service period for the time sensitive traffic or a non-trigger-enabled service period for the time sensitive traffic.

63. The method according to claim 62, wherein in a case where the service period for the time sensitive traffic is the trigger-enabled service period for the time sensitive traffic, the channel protection threshold is further used for the scheduling AP corresponding to the service period for the time sensitive traffic to prioritize gaining the TXOP and/or initiate the transmission of the time sensitive traffic data within the service period for the time sensitive traffic in a case where the channel within the channel protection threshold is in the idle state.

64. The method according to claim 62 or 63, wherein in a case where the service period for the time sensitive traffic is the non-trigger-enabled service period for the time sensitive traffic, the channel protection threshold is further used for the member STA corresponding to the service period for the time sensitive traffic to prioritize gaining the TXOP and/or initiate the transmission of the time sensitive traffic data within the service period for the time sensitive traffic in a case where the channel within the channel protection threshold is in the idle state.

65. The method according to any one of claims 57 to 60, wherein the channel protection threshold is negotiated by an AP and an STA.

66. The method according to claim 65, wherein the service period for the time sensitive traffic is a non-trigger-enabled service period for the time sensitive traffic.

67. The method according to any one of claims 57 to 66, wherein the channel protection threshold is carried in a Channel Protection Threshold field or a Channel Protection Threshold subfield.

68. The method according to claim 67, wherein the Channel Protection Threshold field or the Channel Protection Threshold subfield is carried in a broadcast target wake time (TWT) element.

69. The method according to claim 68, wherein the broadcast TWT element is carried in a management frame.

70. The method according to claim 68 or 69, wherein the broadcast TWT element further indicates a type of the service period for the time sensitive traffic.

71. The method according to any one of claims 57 to 70, wherein a start time of the channel protection threshold is coincident with a start time of the service period for the time sensitive traffic.

72. The method according to any one of claims 57 to 71, wherein the second wireless device comprises at least one of the following items:
the first wireless device is a non-scheduling AP corresponding to the service period for the time sensitive traffic;
the first wireless device is a non-member STA corresponding to the service period for the time sensitive traffic; or
the first wireless device invokes a backoff procedure of an access category corresponding to a traffic identifier of the service period for the time sensitive traffic.

73. The method according to any one of claims 57 to 72, wherein the service period for the time sensitive traffic comprises a restricted target wake time (TWT) service period.

74. An apparatus for channel access, supporting a service period for time sensitive traffic, and comprising:
a first transmitting module, configured to transmit a channel protection threshold to a station (STA), wherein the channel protection threshold is used for a scheduling access point (AP) corresponding to the service period for the time sensitive traffic and/or a member STA corresponding to the service period for the time sensitive traffic to prioritize gaining a transmission opportunity (TXOP) and/or initiate transmission of time sensitive traffic data within the service period for the time sensitive traffic.

75. An apparatus for channel access, supporting a service period for time sensitive traffic, and comprising:
a second receiving module, configured to receive a channel protection threshold from an access point (AP), wherein the channel protection threshold is used for a scheduling AP corresponding to the service period for the time sensitive traffic and/or a member station (STA) corresponding to the service period for the time sensitive traffic to prioritize gaining a transmission opportunity (TXOP) and/or initiate transmission of time sensitive traffic data within the service period for the time sensitive traffic.

76. An apparatus for channel access, comprising:
a third processing module, configured to prioritize gaining a transmission opportunity (TXOP) and/or initiate transmission of time sensitive traffic data within a service period for the time sensitive traffic in a case where a channel within a channel protection threshold is in an idle state, wherein the apparatus supports the service period for the time sensitive traffic, and the channel protection threshold is used for a scheduling access point (AP) corresponding to the service period for the time sensitive traffic and/or a member station (STA) corresponding to the service period for the time sensitive traffic to prioritize gaining the TXOP and/or initiate the transmission of the time sensitive traffic data within the service period for the time sensitive traffic.

77. An apparatus for channel access, comprising:
a fourth processing module, configured to defer transmission and/or reinvoke a backoff procedure within a service period for time sensitive traffic in a case where a target interval is less than or equal to a channel protection threshold, wherein the apparatus supports the service period for the time sensitive traffic, the channel protection threshold is used for a scheduling access point (AP) corresponding to the service period for the time sensitive traffic and/or a member station (STA) corresponding to the service period for the time sensitive traffic to prioritize gaining a transmission opportunity (TXOP) and/or initiate transmission of time sensitive traffic data within the service period for the time sensitive traffic, the target interval is an interval between a first time and a second time, wherein the first time is a start time of the service period for the time sensitive traffic, the second time is a time when a backoff counter corresponding to the backoff procedure backs off to 0 or data transmission is initiated, and the second time is within the service period for the time sensitive traffic.

78. A wireless device, comprising:
a processor;
a transceiver connected to the processor; and
a memory configured to store one or more executable instructions by the processor; wherein the processor is configured to load and execute the one or more executable instructions to cause the wireless device to perform the method for channel access as defined in any one of claims 1 to 20, 21 to 40, 41 to 56, or 57 to 73.

79. A computer-readable storage medium, storing one or more executable instructions, which when loaded and run by a processor, cause the processor to perform the method for channel access as defined in any one of claims 1 to 20, 21 to 40, 41 to 56, or 57 to 73.

80. A chip, comprising: programmable logical circuity and/or one or more computer instructions, wherein the chip is configured to perform the method for channel access as defined in any one of claims 1 to 20, 21 to 40, 41 to 56, or 57 to 73.

81. A computer program product, comprising one or more computer instructions, wherein the one or more computer instructions are stored in a computer-readable storage medium, and when read and executed by a processor of a computer device, cause the computer device to perform the method for channel access as defined in any one of claims 1 to 20, 21 to 40, 41 to 56, or 57 to 73.

82. A computer program, comprising: one or more computer instructions, wherein the one or more computer instructions, when loaded and executed by a processor of a computer device, cause the computer device to perform the method for channel access as defined in any one of claims 1 to 20, 21 to 40, 41 to 56, or 57 to 73.
